(19) Europäisches Patentamt / European Patent Office / Office européen des brevets

(11) **EP 3 563 524 B1**

(12) **FASCICULE DE BREVET EUROPEEN**

(45) Date de publication et mention
de la délivrance du brevet:
**19.04.2023 Bulletin 2023/16**

(21) Numéro de dépôt: **17832525.4**

(22) Date de dépôt: **21.12.2017**

(51) Classification Internationale des Brevets (IPC):
***H04L 12/28*** (2006.01)

(52) Classification Coopérative des Brevets (CPC):
**H04L 12/2807; H04L 12/2818; H04L 12/2825;
H04L 12/2834; H04L 12/2836;** H04L 67/12;
H04L 69/18

(86) Numéro de dépôt international:
**PCT/FR2017/053773**

(87) Numéro de publication internationale:
**WO 2018/122507 (05.07.2018 Gazette 2018/27)**

(54) **PROCÉDÉ DE CONFIGURATION, DE CONTRÔLE OU DE SUPERVISION D'UNE INSTALLATION DOMOTIQUE**

VERFAHREN ZUR KONFIGURATION, STEUERUNG ODER ÜBERWACHUNG EINER HEIMAUTOMATISIERUNGSANLAGE

METHOD FOR CONFIGURING, CONTROLLING OR MONITORING HOME AUTOMATION EQUIPMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.12.2016 FR 1663440**

(43) Date de publication de la demande:
**06.11.2019 Bulletin 2019/45**

(73) Titulaire: **Overkiz
74370 Metz-Tessi (FR)**

(72) Inventeur: **POGNANT, Sylvain
74600 Seynod (FR)**

(74) Mandataire: **Germain Maureau
12, rue Boileau
69006 Lyon (FR)**

(56) Documents cités:
**WO-A1-2016/038374**

• **John Blackford ET AL: "TR-069 CPE WAN
Management Protocol", , 8 janvier 2014
(2014-01-08), pages 1-228, XP055278927, Extrait
de l'Internet:
URL:https://www.broadband-forum.org/techni
cal/download/TR-069_Amendment-5.pdf [extrait
le 2016-06-08]**
• **CARLES GOMEZ ET AL: "Wireless home
automation networks: A survey of architectures
and technologies", IEEE COMMUNICATIONS
MAGAZINE, IEEE SERVICE CENTER,
PISCATAWAY, US, vol. 48, no. 6, 1 juin 2010
(2010-06-01), pages 92-101, XP011310467, ISSN:
0163-6804**

## Description

### Domaine de l'invention

La présente invention concerne la domotique.

### Art antérieur

Une installation domotique d'un bâtiment peut comprendre une pluralité de dispositifs domotiques. Il est connu de procéder à la configuration, et au contrôle, c'est à dire à la commande et/ou à la supervision de ladite installation en utilisant une unité centrale de commande qui communique avec un ou plusieurs dispositifs domotiques.

Dans une telle installation, les dispositifs domotiques sont disposés sur un réseau local et peuvent communiquer selon une pluralité de protocoles locaux, notamment des protocoles locaux de type protocole domotique, par exemple un protocole propriétaire n'utilisant pas un adressage IP, ou encore des protocoles de communication au dessus du protocole IP, ou un protocole point à point générique, par exemple Bluetooth.

La présence de différents protocoles de communication ne permet pas une communication facile avec les dispositifs ou oblige à prévoir l'implémentation de plusieurs protocoles de communication pour permettre la communication avec ces dispositifs, ce qui augmente le coût et/ou la complexité de la programmation pour accéder à ces dispositifs.

Par ailleurs, les dispositifs domotiques sont disposés sur un réseau local et ne sont pas accessibles aisément pour une communication, une commande ou une supervision par un dispositif ou un noeud distant, notamment par l'intermédiaire d'un réseau étendu.

La présente invention a pour but de résoudre tout ou partie des inconvénients mentionnés ci-dessus.

"WO 2016/038374 A1 (ALERTME COM LTD [GB]) 17 mars 2016 (2016-03-17)" porte sur la domotique "home automation network". Une passerelle résidentielle (in-home gateway) gère plusieurs dispositifs de différents fabricants et des fournisseurs de service, le tout dans un environnement "multi-protocole". Plusieurs couches d'abstraction sont définies et qui réussissent à virtualiser les dispositifs domotiques (senseurs et actuateurs). Ces dispositifs virtuels communiquent avec des terminaux (genre téléphone intelligent, smart-phone) qui peuvent être connectés à l'Internet et non au réseau résidentiel.

### Exposé de l'invention

L'invention est définie par les procédés des revendications indépendantes 1 et 2.

A cet effet, la présente invention concerne un procédé de configuration d'une installation domotique comprenant au moins un dispositif domotique et au moins une unité centrale de commande, l'au moins un dispositif domotique étant susceptible de communiquer avec l'unité centrale de commande le procédé étant exécuté par une unité de gestion susceptible de communiquer avec l'au moins une unité centrale de commande par l'intermédiaire d'au moins un premier protocole ; le procédé comprenant les étapes suivantes :

- Réception, en provenance de l'unité centrale de commande, d'au moins un message de configuration relatif à au moins un dispositif domotique et à :

  ◦ un type de l'au moins un dispositif domotique ; et/ou
  ◦ au moins une définition d'une fonction ou d'un groupe de fonctions de l'au moins un dispositif domotique selon ledit premier protocole de communication et/ou
  ◦ au moins une définition d'une variable d'état ou d'un groupe de variables d'états de l'au moins un dispositif domotique selon ledit premier protocole de communication ;

- Obtention d'un identifiant de localisation de l'au moins un dispositif domotique selon un second protocole de communication cible ;
- Enregistrement de la correspondance entre l'identifiant de localisation de l'au moins un dispositif domotique selon le second protocole de communication et d'au moins un élément d'identification contenu dans le message de configuration ou déterminable à réception du message de configuration dont le contenu ou la combinaison permet une identification unique d'un dispositif domotique ;
- Enregistrement de l'au moins un type de l'au moins un dispositif domotique ; et/ou de l'au moins une définition d'une fonction ou d'un groupe de fonctions de l'au moins un dispositif domotique et/ou de l'au moins une définition d'une variable d'état ou d'un groupe de variables d'états de l'au moins un dispositif domotique ; et/ou d'une règle de conversion de fonction agencée pour convertir la définition de l'au moins une fonction ou groupe de fonction selon le premier protocole de communication en au moins une définition d'une fonction ou d'un groupe de fonction selon le second protocole de communication cible et/ou d'une règle de conversion d'état agencée pour convertir la définition de l'au moins une variable d'état selon le premier protocole de communication en au moins une définition d'une variable d'état selon le second protocole de communication cible.

Grâce aux dispositions selon l'invention, il est possible de mettre en place une publication d'un identifiant de localisation, selon le second protocole cible de communication pour des dispositif domotiques qui ne sont capables de communiquer que selon un protocole local ou propriétaire, sans avoir à apporter de modifications sur cet au moins un dispositif, ni sur l'unité centrale de commande à laquelle le dispositif est rattaché, et ainsi de mettre en relation cet au moins un dispositif avec d'autres noeuds d'un réseau étendu défini selon le second protocole de communication.

Une fois les étapes du procédé de configuration réalisées, le dispositif domotique est virtualisé. L'unité de gestion peut agir pour le compte du dispositif domotique sur le réseau selon le deuxième protocole de communication.

Il est ainsi possible de présenter des fonctions/commandes ou des variables d'état de l'au moins un dispositif pour un contrôle selon le second protocole. Les fonctions/commande peuvent être traduites entre le premier protocole de communication et le second protocole de communication par les règles de conversion. La définition de l'au moins une fonction ou de l'au moins une variable d'état peut être explicite ou déterminée à partir d'au moins une définition d'un type selon ledit premier protocole de communication de l'au moins un dispositif domotique qui peut être déterminé à partir du message de configuration ou à partir d'un groupe de fonctions connu selon le protocole considéré (« function cluster »).

Selon une possibilité, chaque dispositif domotique est identifié par un identifiant de localisation, comme s'il pouvait lui-même assurer une communication. Plusieurs dispositifs distincts ont donc des identifiants de localisation distincts selon le deuxième protocole. L'unité de gestion reçoit les messages adressés à ces identifiants et est en mesure d'en assurer le traitement et/ou le routage jusqu'à l'unité centrale de commande à laquelle est rattachée le dispositif, en utilisant les règles de conversion pour communiquer un message converti selon le premier protocole.

Selon une autre possibilité, un groupe de dispositif est identifié par un même identifiant selon le deuxième protocole. Ces dispositions permettent d'envisager une configuration d'un groupe de dispositif commandable comme un seul dispositif, de façon performante par un seul appel de fonction.

Selon une variante, le procédé comprend une pluralité de correspondance entre un dispositif communiquant selon le premier protocole de communication et des identifiants de localisation selon plusieurs deuxièmes procédés de commande. Ces dispositions permettent de virtualiser le dispositif pour le faire communiquer selon plusieurs deuxièmes protocoles cibles.

Selon une variante, l'unité de gestion envoie un message d'inscription à destination d'un dispositif domotique ou à destination d'une unité centrale de commande à laquelle un dispositif est rattaché afin de s'abonner à des notifications relatives à au moins une variable d'état d'au moins un dispositif domotique. Ainsi des notifications concernant les variables d'état seront communiquées à l'unité de gestion dans le cadre d'un procédé de supervision.

Selon un mode de mise en oeuvre, le procédé comprend une détermination d'une clef d'indexation sur la base d'éléments d'identification contenus dans le message de configuration ou déterminables à réception du message dont la combinaison permet une identification unique d'un dispositif domotique.

L'identification est unique sur l'ensemble des dispositifs domotiques pouvant faire l'objet d'un accès par l'unité de gestion.

Selon un mode de mise en oeuvre, les différents éléments d'identification, pris individuellement, ne sont pas nécessairement uniques pour chaque dispositif ; mais la combinaison de deux ou plusieurs éléments d'information doit l'être. L'identifiant de l'unité centrale de commande à laquelle le dispositif domotique est rattaché ou l'adresse du dispositif domotique, ou éventuellement celle de son parent dans un système d'adressage hiérarchique dans le réseau local géré par l'unité centrale de commande sont des exemples d'éléments d'identification.

Selon un mode de mise en oeuvre, un identifiant unique de dispositif peut être défini, cet identifiant pouvant utiliser notamment une notation d'adresse indépendante du protocole, par exemple selon un format de type URL.

Selon un mode de mise en oeuvre, l'identifiant unique de dispositif comprend une adresse logique de dispositif.

Selon un mode de mise en oeuvre, l'adresse logique de dispositif comprend :

- un type protocole de communication du dispositif;
- un chemin de communication vers le dispositif.

Selon un mode de mise en oeuvre, le chemin de communication vers le dispositif inclut les éventuelles unités centrales de commande intermédiaires et les adresses de terminaison ou identifiant de localisation à traverser, organisées de préférence selon une topologie hiérarchique.

Selon un mode de mise en oeuvre, l'adresse logique de dispositif comprend en outre un identifiant de sous-système si des sous-systèmes ou sous-ensembles du dispositif peuvent être définis.

Au sens de la présente invention, un troisième protocole est un protocole de communication utilisé pour la communication entre l'unité de gestion et au moins une unité centrale de commande, un troisième protocole est par exemple un protocole de communication au dessus du protocole IP et/ou un protocole générique permettant une communication point à point. A titre d'exemple, les protocoles de transport sur IP de type Websockets, MQTT ou CoAP peuvent constituer un premier protocole de communication.

Au sens de la présente invention, un deuxième protocole cible est par exemple un protocole de communication au dessus du protocole IP sur un réseau étendu ou un protocole générique permettant une communication point à point. A titre d'exemple, un protocole utilisant IPv6 peut être utilisé.

Selon un mode de mise en oeuvre, le deuxième protocole cible est un protocole au dessus du protocole IP.

Au sens de la présente invention, un premier protocole local est un protocole de communication local, notamment un protocole local non IP, par exemple un protocole domotique, notamment un protocole domotique de type propriétaire. Il peut y avoir plusieurs protocoles locaux. A titre d'exemple, les protocoles Z-Wave, EnOcean ou IO Homecontrol peuvent constituer un premier protocole local. Alternativement, un premier protocole peut également être un protocole de communication au dessus du protocole IP ou un protocole générique permettant une communication point à point. A titre d'exemple, le protocole applicatif WEAVE utilisant des protocoles de transport 6lowpan et thread pour un réseau maillé peuvent constituer un premier protocole.

Le premier protocole est notamment utilisé pour la communication entre une unité centrale de commande et au moins un dispositif domotique rattaché à ladite unité centrale de commande.

Au sens de la présente invention, un réseau de transport est un réseau de mise en relation entre l'au moins un dispositif et l'unité centrale de commande par le troisième protocole. Ce réseau permet le transport et l'adressage.

Au sens de la présente invention, un noeud est un équipement présent sur un réseau utilisant le deuxième protocole de communication qui possède une identifiant de localisation unique sur le réseau étendu considéré.

Au sens de la présente invention, un identifiant de localisation est un identifiant unique dans le réseau considéré.

Dans le cas du premier protocole de communication, il est notamment possible d'utiliser une adresse dans un format propriétaire correspondant au protocole domotique utilisé. Dans le cas du deuxième protocole cible, un identifiant de localisation peut notamment être une adresse réseau, comme par exemple une adresse IPv4 ou IPv6, ou encore une composition d'une adresse réseau et d'un identifiant de ressource indiqué par un chemin d'accès, par exemple sous la forme de l'URL suivante :

<protocol>://<host address>[:<port>]/<resource path>

Au sens de la présente invention, un dispositif domotique est un équipement domotique et/ou un capteur, ou encore une partie d'équipement domotique ou une partie de capteur correspondant à un sous-ensemble fonctionnel. Un dispositif domotique peut également correspondre à un point de commande d'autres dispositifs domotiques.

Au sens de la présente invention, un message est un élément d'information notifié ou réceptionné via un module de communication depuis un équipement extérieur, ou sous la forme d'un appel synchrone ou asynchrone, pouvant également correspondre à un appel de fonction local ou distant.

Au sens de la présente invention, une installation domotique ou installation est un ensemble comprenant une pluralité de dispositifs domotiques et au moins une unité centrale de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs électroniques forment des groupes d'au moins un dispositif domotique rattaché à une unité centrale de commande.

Au sens de la présente invention, une unité centrale de commande de l'installation domotique est une unité électronique comprenant :

- au moins une unité de traitement pour contenir et exécuter au moins un programme d'ordinateur,
- au moins un module de communication destinée au contrôle et/ou à la commande d'au moins un dispositif domotique ; alternativement l'unité électronique peut être intégrée à un dispositif domotique ; et
- au moins un module de communication avec l'unité de gestion.

Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

Il est également possible que l'unité centrale de commande soit intégrée à un routeur et/ou à un modem réalisant une connexion à un réseau étendu, notamment à Internet.

Selon un mode de mise en oeuvre, une unité de gestion est un serveur connecté à distance à l'au moins une installation domotique, par l'intermédiaire d'un réseau étendu. Il est à noter que le terme serveur est une désignation logique qui peut recouvrir l'utilisation de plusieurs serveurs physiques pour répartir la charge de traitement informatique à réaliser.

Selon un autre aspect de l'invention, l'unité de gestion est une unité centrale destinée à être reliée à une ou plusieurs unités centrales de commande sur des réseaux privés ou locaux distincts, ou encore sur le même réseau local.

Au sens de la présente invention, une variable d'état est un élément descriptif de l'état d'un dispositif domotique. La valeur d'une variable d'état peut correspondre à la marche ou à l'arrêt pour un interrupteur, ou à un degré ou pourcentage d'ouverture pour un volet. Par ailleurs, une variable d'état peut correspondre à une valeur de mesure d'un capteur, par exemple à une valeur d'une grandeur physique ou d'environnement. La description des états des dispositifs peut être générique ou spécialisée, en fonction du protocole local. Les identifiants des variables d'état peuvent être numériques ou alphanumériques. Les valeurs des variables d'états peuvent utiliser des formats ou des échelles personnalisées ou propriétaires.

Au sens de la présente invention, une commande/fonction correspond à un ordre pouvant être donné à un dispositif domotique en vue de la réalisation d'une action par ce dispositif ou de l'obtention en retour d'une information, par exemple d'une information relative à une variable d'état de ce dispositif.

Selon une possibilité, le procédé comprend une pluralité d'étapes de réception de messages de configuration correspondant à une pluralité de premiers protocoles de communication.

Selon une possibilité, le procédé comprend une pluralité d'étapes d'émission de message de découverte selon une pluralité de premiers protocoles de communication.

Selon un mode de mise en oeuvre, l'étape d'obtention de l'identifiant de localisation correspond à une réception d'une saisie par l'utilisateur d'un identifiant de localisation selon le deuxième protocole de communication.

Selon un mode de mise en oeuvre, l'étape de réception d'un message de configuration comprend une déclaration par l'utilisateur de l'identifiant de localisation selon le premier protocole de communication et/ou une déclaration par l'utilisateur d'au moins une fonction ou d'un type de dispositif selon le premier protocole de communication.

Selon un mode de mise en oeuvre, l'étape de conversion comprend la limitation de la fonction demandée ou l'interdiction d'une commande/fonction à réaliser.

Ces dispositions permettent notamment lors de la conversion d'opérer un bridage des plages de valeurs de commande ou d'interdire la réalisation de certaines commandes. Ces dispositions sont mises en oeuvre au niveau de l'unité de gestion, sans modification nécessaire au niveau de l'équipement.

Selon un mode de mise en oeuvre, le procédé de configuration peut être déclenché par la réception d'un message reçu par l'unité de gestion ou l'unité centrale de commande en provenance d'un terminal utilisateur.

Selon une variante, un appui sur un bouton de l'unité centrale de commande peut également permettre le déclenchement du procédé. Alternativement ou en complément, une action sur un dispositif domotique, comme un appui sur un bouton peut être considéré pour le déclenchement du procédé.

Selon un mode de mise en oeuvre, le procédé comprend en outre l'étape suivante :

- Obtention d'au moins une règle de conversion de fonction agencée pour convertir la définition de l'au moins une fonction selon le premier protocole de communication en au moins une définition d'une fonction selon le second protocole de communication cible et/ou d'une règle de conversion d'état agencée pour convertir la définition de l'au moins une variable d'état selon le premier protocole de communication en au moins une définition d'une variable d'état selon le second protocole de communication cible.
- Enregistrement de l'au moins une règle de conversion de fonction et/ou de l'au moins une règle de conversion d'état.

Selon un mode de réalisation, l'étape d'obtention comprend une étape de téléchargement de règles de conversion en provenance d'un serveur tiers.

Selon un mode de mise en oeuvre, l'étape de téléchargement peut intervenir lorsque l'au moins une règle de conversion concernée n'est pas disponible localement sur l'unité de gestion.

Selon un mode de mise en oeuvre, le procédé comprend en outre l'étape suivante :

- définition d'une action à réaliser au moins partiellement par l'unité centrale de commande ou l'unité de gestion en correspondance avec une fonction selon le deuxième protocole correspondant à un identifiant de localisation ;

Ces dispositions permettent de procéder à un ajout de fonction ou à une simulation de fonction, lorsque le dispositif domotique correspondant à l'identifiant considéré n'est pas en mesure de fournir la commande demandée.

Selon un mode de mise en oeuvre, l'étape de conversion comprend la limitation de la fonction demandée ou l'interdiction d'une commande/fonction à réaliser.

La présente invention concerne également un procédé de découverte d'une installation domotique comprenant au moins un dispositif domotique et au moins une unité centrale de commande, l'au moins un dispositif domotique étant susceptible de communiquer avec l'unité centrale de commande; le procédé étant exécuté par une unité de gestion susceptible de communiquer avec l'au moins une unité centrale de commande par l'intermédiaire d'au moins un premier protocole ; le procédé comprenant les étapes suivantes :

- Envoi d'au moins un message d'annonce de compatibilité ou de description selon un deuxième protocole de communication cible en relation avec :

  ○ au moins un identifiant de localisation de l'au moins un dispositif domotique selon le second protocole de communication correspondant à un l'identifiant de localisation de l'au moins un dispositif domotique selon le premier protocole de communication ; et
  ○ Optionnellement, un type de l'au moins un dispositif domotique ou au moins une description d'une fonction ou d'un groupe de fonctions selon le deuxième protocole de communication et/ou au moins une description d'une variable d'état ou d'un groupe de variables d'états de l'au moins un dispositif domotique selon le deuxième protocole de communication.

Selon un mode de mise en oeuvre, l'envoi du message correspond à une réponse à une requête ou à un message en provenance d'un noeud comprenant un critère de filtrage sur la base par exemple d'un identifiant de localisation ou d'un groupe d'identifiants de localisation ou encore sur la base d'une information relative à une installation et/ou à un compte d'un utilisateur et/ou à un type de produits.

Selon un mode de mise en oeuvre, l'envoi du message correspond à une réponse à une requête ou à un message en provenance d'un noeud adressée à un identifiant de localisation sur l'unité de gestion correspondant à un identifiant de localisation d'un registre.

Le message de d'annonce de compatibilité peut également être considéré comme un message de déclaration d'existence.

Selon une possibilité, l'au moins un message d'annonce de compatibilité et l'au moins un message de description peuvent être confondus.

Selon une possibilité, l'envoi du message de description fait suite à la réception d'un message de découverte.

Selon un mode de mise en oeuvre, le procédé de découverte comprend une étape de réception d'au moins un message de découverte en provenance d'un noeud communiquant selon un deuxième protocole de communication ;

Selon une variante, l'unité de gestion peut vérifier périodiquement la disponibilité des dispositifs domotiques par l'intermédiaire d'une unité centrale de commande et n'envoyer des messages de description et/ou de déclaration d'existence qu'en cas de disponibilité du dispositif domotique concerné.

Selon un mode de mise en oeuvre, le procédé de découverte comprend les étapes d'un procédé de configuration tel que décrit précédemment.

La présente invention concerne également un procédé de commande d'une installation domotique comprenant au moins un dispositif domotique et au moins une unité centrale de commande, l'au moins un dispositif domotique étant susceptible de communiquer avec l'unité centrale de commande ; le procédé étant exécuté par une unité de gestion susceptible de communiquer avec l'au moins une unité centrale de commande par l'intermédiaire d'au moins un premier protocole ; le procédé comprenant les étapes suivantes :

- Réception d'au moins un message de commande en provenance d'un noeud communiquant selon un deuxième protocole de communication comprenant au moins un identifiant de localisation d'un dispositif domotique selon le deuxième protocole de communication cible et au moins une définition d'une fonction du dispositif domotique selon le deuxième protocole de communication ;
- Détermination d'au moins un élément d'identification du dispositif domotique dont le contenu ou la combinaison permet une identification unique du dispositif domotique sur la base de l'identifiant de localisation de l'au moins un dispositif domotique selon le second protocole de communication ;
- Optionnellement, application d'une règle de conversion de fonction agencée pour convertir la définition de l'au moins une fonction selon le second protocole de communication cible en au moins une définition d'une fonction selon le premier protocole de communication ;
- Envoi d'au moins un message de commande à destination de l'au moins une unité centrale de commande à laquelle est rattachée l'au moins un dispositif domotique correspondant à l'au moins un élément d'identification, le message de commande étant relatif à la fonction selon le premier protocole de communication.

Selon un mode de mise en oeuvre, l'étape d'application d'une règle de conversion peut comprendre la réalisation d'étapes de traitements complémentaires à l'appel de la commande, notamment si une partie de la fonction ne peut pas être réalisée sur le dispositif domotique, et notamment un enrichissement partiel de la fonction.

A titre d'exemple, une planification d'une commande peut être prévue si le dispositif en lui-même ne permet pas une telle planification. Ainsi, il est possible d'implémenter sur l'unité de gestion une fonction de type « Calendar Weave » pour déclencher une commande d'ouverture le lundi à 8h00 pour un dispositif domotique de type store.

Egalement à titre d'exemple, une conversion de paramètre peut être réalisée par l'unité de gestion.

Selon un mode de mise en oeuvre, préalablement à l'étape de réception d'un message de commande, une connexion peut être établie entre un noeud communiquant selon le deuxième protocole de communication et l'unité de gestion.

L'unité de gestion agit ainsi sur le réseau de communication selon le second protocole de communication en tant que représentant virtuel des dispositifs domotiques.

Selon un mode de mise en oeuvre, le procédé de commande comprend les étapes d'un procédé de configuration tel que décrit précédemment.

Selon un mode de mise en oeuvre, le procédé de commande comprend les étapes d'un procédé de découverte tel que décrit précédemment.

Selon un mode de mise en oeuvre, le procédé de commande comprend en outre les étapes suivantes :

- Réception d'au moins un message de retour de commande en provenance de l'au moins une unité centrale de commande à laquelle est rattachée l'au moins un dispositif domotique selon le premier protocole de communication ;
- Optionnellement, Application d'une règle de conversion de fonction afin de convertir une information de retour de commande exprimée selon le premier protocole de communication en une information de retour de commande exprimée selon le second protocole de communication cible ;
- Envoi d'au moins un message de retour de commande à destination de l'au moins un noeud communiquant selon un deuxième protocole de communication, le message de retour de commande comprenant une information de retour de commande selon le deuxième protocole cible de communication ;

La présente invention concerne également un procédé de supervision d'une installation domotique comprenant au moins un dispositif domotique et au moins une unité centrale de commande, l'au moins un dispositif domotique étant susceptible de communiquer avec l'unité centrale de commande ; le procédé étant exécuté par une unité de gestion susceptible de communiquer avec l'au moins une unité centrale de commande par l'intermédiaire d'au moins un premier protocole ; le procédé comprenant les étapes suivantes :

- Réception d'un message de supervision en provenance d'une unité centrale de commande à laquelle est rattachée un dispositif domotique comprenant une information relative à une valeur d'au moins une variable d'état de l'au moins un dispositif domotique selon ledit premier protocole de communication ;
- application d'une règle de conversion d'état afin de convertir l'au moins une information relative à une valeur d'au moins une variable d'état de l'au moins un dispositif domotique exprimée selon le premier protocole de communication (P1) en une valeur d'au moins un variable d'état de l'au moins un dispositif domotique exprimée selon le second protocole de communication cible ;
- Détermination d'un identifiant de localisation de l'au moins un dispositif domotique selon le deuxième protocole de communication sur la base d'au moins un élément d'identification contenu dans le message de supervision ou déterminable à réception du message de supervision dont le contenu ou la combinaison permet une identification unique d'un dispositif domotique ;
- Envoi d'au moins un message de supervision à destination d'au moins un noeud communiquant selon un deuxième protocole de communication, le message de supervision comprenant une information relative à une valeur d'au moins un variable d'état de l'au moins un dispositif domotique selon le deuxième protocole cible de communication et en relation avec l'identifiant de localisation de l'au moins un dispositif domotique selon le deuxième protocole de communication ;

Selon un mode de mise en oeuvre, les étapes d'application d'une règle de conversion et d'adaptation d'adresse peuvent être réalisées séquentiellement dans un ordre indifférent ou simultanément.

Selon une possibilité, l'envoi du message de supervision peut être réalisé à l'initiative de l'unité centrale de commande de façon spontanée ou suite à la réception d'un message de supervision en provenance d'un dispositif domotique.

Selon une autre possibilité, le message de supervision peut être envoyé suite à la réception par l'unité de gestion d'un message de requête en provenance d'un noeud communiquant selon le deuxième protocole de communication. Selon cette deuxième possibilité, l'unité de gestion comprend un espace ou base de stockage des valeurs de variables d'état pour les dispositifs domotiques qui sont rattachés aux unités centrales de commandes qu'elle prend en compte.

Selon une variante, l'unité de gestion consulte périodiquement les valeurs de variables d'état des dispositifs domotiques, détecte les modifications de valeurs de variables d'état en comparant une dernière valeur obtenue et au moins une valeur préalablement stockée. L'unité de gestion envoie, en cas de modification, un message de supervision relatif à la valeur variable d'état modifiée à destination d'au moins un noeud communiquant selon le second protocole de communication.

Ces dispositions permettent de mettre en oeuvre une émulation de mode événementiel pour un dispositif n'offrant pas une telle fonctionnalité.

Selon un mode de mise en oeuvre, le procédé de commande comprend les étapes d'un procédé de configuration tel que décrit précédemment.

Selon un mode de mise en oeuvre, le procédé de commande comprend les étapes d'un procédé de découverte tel que décrit précédemment.

Selon un mode de mise en oeuvre, l'étape d'envoi est réalisée à destination d'au moins un noeud enregistré dans une liste de souscription à un évènement relatif à l'au moins une variable d'état.

Selon une variante, l'étape d'envoi peut être réalisée de façon indifférenciée à un ensemble de noeuds présents sur le réseau communiquant selon le deuxième protocole de communication. Cette disposition correspond à mode dit « Broadcast ».

Selon un mode de mise en oeuvre, le procédé de commande comprend une étape d'envoi à destination d'une unité centrale de commande à laquelle est rattachée un dispositif domotique d'une demande d'enregistrement dans une liste de souscription à un évènement relatif à l'au moins une variable d'état du dispositif domotique.

Les différents aspects définis ci-dessus non incompatibles peuvent être combinés.

## Brève description des figures

L'invention sera mieux comprise à l'aide de la description détaillée qui est exposée ci-dessous en regard du dessin annexé dans lequel :

La figure 1 est une vue schématique d'un bâtiment et d'une installation domotique;

La figure 2 est un schéma présentant une architecture d'un système comprenant l'installation domotique illustrée à la figure 1, une deuxième installation domotique, ainsi qu'un serveur destiné à être connecté à un terminal utilisateur ;

La figure 3 est un schéma représentant les relations entre une unité de gestion, une unité de gestion additionnelle, une unité centrale de commande communiquant avec l'unité de gestion selon un troisième protocole, des noeuds réseaux communiquant selon un second protocole cible et des dispositifs de l'installation domotique communiquant selon un premier protocole de communication local.

La figure 4 est un schéma illustrant un mode de mise en oeuvre d'un procédé de configuration d'une installation domotique selon l'invention.

La figure 5 est un tableau de correspondance entre des fonctions, groupes de fonctions, variables d'états, groupes de variables d'états ou types exprimés selon le troisième protocole de communication et des fonctions, groupes de fonctions, variables d'états, groupes de variables d'états ou types exprimés selon le second protocole de communication cible.

La figure 6 est un tableau de noeuds identifiant les relations entre des identifiants uniques de dispositif domotique exprimés selon le premier protocole de communication et des identifiants de localisation exprimés selon le second protocole de communication cible.

La figure 7 est un schéma illustrant un mode de mise en oeuvre d'un procédé de découverte d'une installation domotique selon l'invention.

La figure 8 est un schéma illustrant un mode de mise en oeuvre d'un procédé de commande d'une installation domotique selon l'invention.

La figure 9 est un schéma illustrant un mode de mise en oeuvre d'un procédé de supervision d'une installation domotique selon l'invention.

## Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

## Description d'un système comprenant une installation domotique

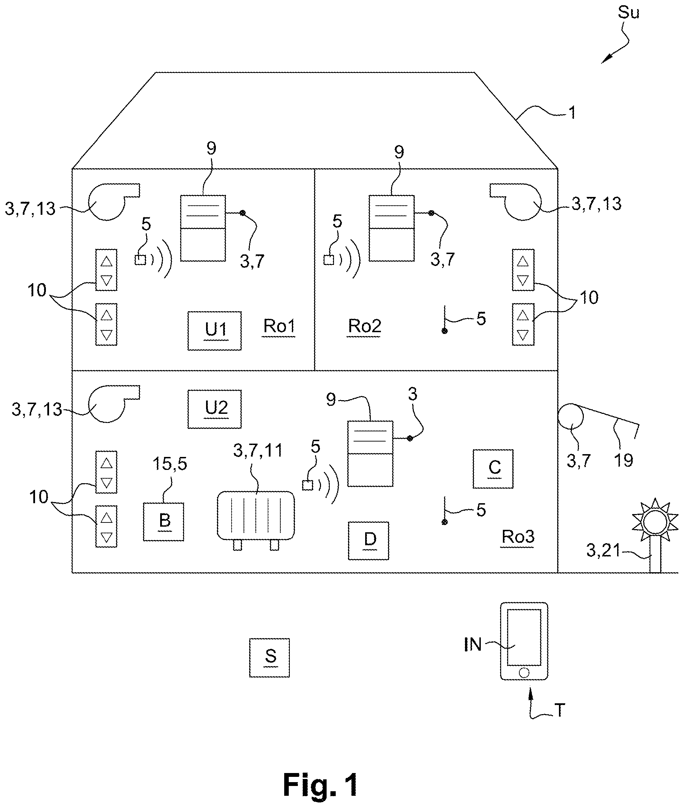

Comme illustré à la figure 1, un bâtiment 1 comprend à titre d'exemple trois pièces Ro1, Ro2, Ro3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique Su peut également comprendre un point de commande 15 d'un actionneur 7, comme un boîtier de commande B sans fil pour le volet roulant 9.

L'installation domotique Su peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique Su.

Les équipements domotiques 3 et les capteurs 5 peuvent ainsi avoir accès à toute grandeur physique mesurable, comme la température de chaque pièce Ro1, Ro2, Ro3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

L'installation domotique Su comprend une pluralité d'unités centrales de commande U1, U2. En particulier et à titre d'exemple, deux unités centrales de commande U1, U2 sont représentées sur la figure 1. Selon une variante, une installation domotique peut comprendre également une unité centrale de commande unique.

Chaque unité centrale de commande U1, U2 est agencée pour commander et/ou contrôler une partie des dispositifs D de l'installation Su formant un groupe DGrU1, DGrU2. A titre d'exemple, sur la figure 1, l'unité centrale de commande U1 est en charge des dispositifs D disposés dans les pièces Ro1 et Ro2 du premier étage du bâtiment, alors que l'unité centrale de commande U2 est en charge des dispositifs D disposés dans la pièce Ro3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

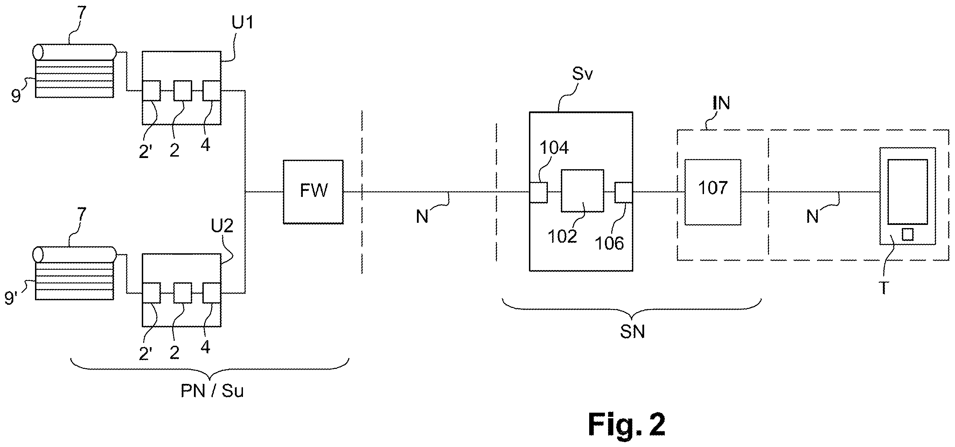

Comme cela est représenté sur la figure 2, chaque unité centrale de commande U est agencée pour communiquer avec un serveur Sv.

Les unités centrales de commande U1, U2 sont disposées sur un réseau privé PN, dont l'accès est en général protégé par un pare-feu FW. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'une mémoire vive, et d'une puce Ethernet.

L'unité centrale de commande U comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1, selon le premier protocole de communication local P1.

A titre d'exemple, le module de communication 2' peut être agencé pour mettre en oeuvre par exemple un ou plusieurs des premiers protocoles locaux P1 par exemple de type Z-Wave, EnOcean, IO Homecontrol, Somfy RTS, KNX, MODBUS, Wavenis, Philips HUE. Ces protocoles locaux sont des protocoles de communication locaux en général non IP.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U comprend, en outre, un module de communication 4 avec le serveur Sv selon un troisième protocole de communication P3. Le serveur Sv permet la commande et/ou le contrôle à distance et comprend une ou plusieurs unités de traitement 102 agencée pour contenir et exécuter un deuxième programme d'ordinateur.

Dans certaines applications, une unité centrale de commande U peut communiquer avec le serveur Sv à travers un serveur intermédiaire Sv', par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette. Le terminal de communication mobile T peut être le même ou un terminal du même type que celui avec lequel l'unité centrale de commande U communique en local au moyen du module de communication 4' comme nous le détaillerons ultérieurement, ou un terminal différent. Nous désignerons indifféremment ces terminaux mobiles par la référence T.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

Les figures 1 et 2 décrivent une installation Su qui comprend un ensemble de dispositifs D et une pluralité d'unités centrales de commande U1, U2, disposées dans un même logement, un même bâtiment ou un même lieu physique.

## Réseaux correspondant aux premier, deuxième et troisième protocoles

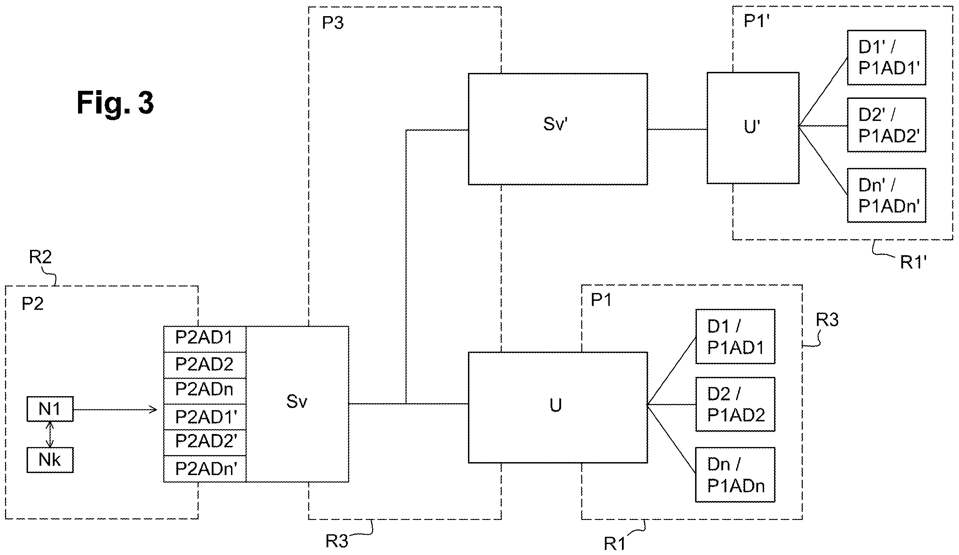

Comme cela est visible sur la figure 3, des dispositifs domotiques D1, D2, Dn appartiennent à un réseau local R1 géré par une unité centrale de commande U au sein de l'installation domotique et communiquent selon un premier protocole de communication local P1 avec l'unité centrale de commande U. les dispositifs D1, D2, Dn possèdent un identifiant de localisation constitué par une adresse locale P1AD1, P1AD2, PlADn dans ce réseau. Les dispositifs logiques D1, D2, Dn peuvent être modélisés comme des noeuds ou points d'extrémité dans le réseau local.

Un second groupe de dispositifs domotiques D1', D2', Dn' est représenté qui appartient à un réseau local R1' géré par une unité centrale de commande U' au sein d'une seconde installation domotique et communiquent selon un premier protocole de communication local P1' avec l'unité centrale de commande U'. Les dispositifs D1', D2', Dn' possèdent un identifiant de localisation constitué par une adresse locale P1AD1', P1AD2', P1ADn' dans ce réseau. L'unité centrale U' communique avec le serveur Sv à travers un serveur intermédiaire Sv'.

L'unité centrale de commande communique avec le Serveur Sv par un troisième protocole de communication P3 sur un troisième réseau R3. Selon une variante, le serveur intermédiaire Sv' communique également par l'intermédiaire du réseau R3.

Un réseau R2 correspond à un deuxième réseau R2 étendu sur lequel la communication peut être réalisée par un deuxième protocole P2. Le Serveur Sv est connecté à ce réseau étendu, ainsi que des terminaux utilisateurs T, points de commandes ou autres dispositifs domotiques qui peuvent être modélisés par des noeuds N appartenant au second réseau R2 et communiquant selon un second protocole de communication cible P2, notamment selon un protocole utilisant le protocole IP. On entend par noeud un équipement présent sur un réseau R2 utilisant le deuxième protocole de communication P2 et qui possède une identifiant de localisation unique sur le réseau R2.

Le serveur ou unité de gestion Sv est agencée pour présenter aux noeuds N1, Nk du réseau R2 communiquant selon le réseau R2 un ensemble d'identifiants de localisation P2AD1, P2AD2, P2ADn selon le deuxième protocole de communication cible P2 pour les dispositifs communiquant selon le premier protocole de communication local P1 et peut offrir une interface de découverte des dispositifs domotiques D1, D2, Dn détaillant le type, les fonctions et/ou les variables d'état des dispositifs, selon le deuxième protocole de communication P2.

**Procédé de configuration**

**Premier mode de mise en oeuvre**

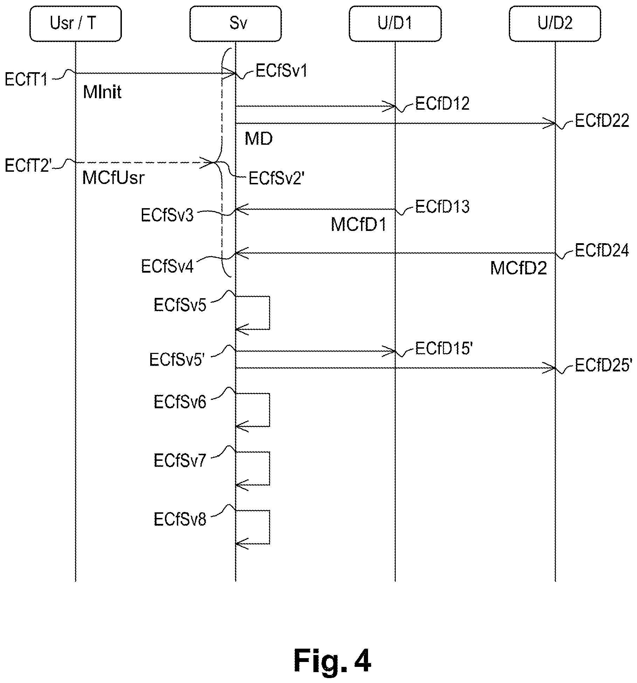

Nous allons à présent décrire un premier mode de réalisation d'un procédé de configuration d'une installation domotique Su en référence à la figure 4, afin d'obtenir la configuration représentée sur la figure 3, le procédé étant exécuté par l'unité de gestion ou serveur Sv. Deux dispositifs domotiques D1, D2 communiquant par l'intermédiaire d'une unité centrale à laquelle ils sont rattachés selon le premier protocole de communication local P1 sont représentés sur la figure 4. Les dispositifs D1 et D2 peuvent être rattachés à la même unité centrale de commande U ou à deux unités centrales de commandes U distinctes. Un seul dispositif domotique ou un nombre supérieur à deux de dispositifs domotiques peut également être considéré.

Dans une première étape EcfSv1, le procédé de configuration peut être déclenché par la réception d'un message MInit reçu par l'unité de gestion Sv en provenance d'un terminal utilisateur Usr/T qui l'émet dans une étape EcfT1.

Dans une étape ECfSv2, l'unité de gestion Sv émet des messages de découverte MD à destination de l'unité centrale de commande à laquelle chaque dispositif D1, D2 est rattaché selon le troisième protocole de communication P3, ce message MD étant reçu respectivement dans des étapes EcfD12 ou ECfD22.

Selon une variante, un appui sur un bouton de l'unité centrale de commande U peut également permettre le déclenchement du procédé. Dans ce cas, le message de configuration est reçu par l'unité de gestion en provenance de l'unité centrale de commande U. Alternativement ou en complément, une action sur un dispositif domotique D, comme un appui sur un bouton peut être considéré comme évènement déclenchant. Dans ce cas également, le message de configuration est reçu par l'unité de gestion Sv en provenance de l'unité centrale de commande U, l'unité centrale de commande recevant le message du dispositif domotique D selon le premier protocole de communication P1. Il peut être considéré dans ces cas que le procédé débute à l'étape de réception d'un message de configuration décrite ci-dessous.

Ainsi, dans des étapes EcfSv3, EcfSv4, l'unité de gestion Sv reçoit des messages de configuration MCfD1, MCfD2 en provenance de l'unité centrale de commande à laquelle chaque dispositif D1, D2 est rattaché qui émet ces messages respectivement dans des étapes ECfD12 et ECfD22.

Chacun de ces messages de configuration MCfD1, MCfD2 est relatif à un identifiant unique DURL d'un dispositif domotique D1, D2 selon le premier protocole de communication P1 et à :

- un type P1TD1, P1TD2 de l'au moins un dispositif domotique D1, D2 ; et/ou
- au moins une définition d'une fonction P1F1D1, P1F2D1, P1F1D2, P1F2D2 ou d'un groupe de fonctions de l'au moins un dispositif domotique D1, D2 selon ledit premier protocole de communication P1 et/ou
- au moins une définition d'une variable d'état P1S1D1, P1S2D1, P1S1D2, P1S2D2 ou d'un groupe de variables d'états de l'au moins un dispositif domotique D1, D2 selon ledit premier protocole de communication P1;

L'identifiant unique DURL peut être contenu dans le message de configuration ou déterminable à la réception de ce message.

Dans une étape ECfSv5, l'unité de gestion Sv obtient un identifiant de localisation P2AD1, P2AD2 pour chaque dispositif domotique D1, D2 selon un second protocole de communication cible P2. Les modes d'obtention de l'identifiant de localisation peuvent être multiples et sont détaillés ultérieurement.

Dans une étape EcfSv6, l'unité de gestion peut procéder à une vérification de l'existence d'au moins une règle de conversion de fonction RCFX agencée pour convertir la définition de l'au moins une fonction P1F1D1, P1F2D1, P1F1D2, P1F2D2 selon le premier protocole de communication P1 en au moins une définition d'une fonction P2F1D1, P2F2D1, P2F1D2, P2F2D2 selon le second protocole de communication cible P2 et/ou d'une règle de conversion d'état RCSX agencée pour convertir la définition de l'au moins une variable d'état P1S1D1, P1S2D1, P1S1D2, P1S2D2 selon le premier protocole de communication P1 en au moins une définition d'une variable d'état P2S1D1, P2S2D1, P2S1D2, P2S2D2 selon le second protocole de communication cible P2.

Cette vérification peut se baser sur le type de dispositif P2TD1, P2TD2, ou sur les définitions de fonctions, de groupes de fonctions et/ou sur les définitions de variables d'état ou de groupes de variables d'état. En effet, selon les protocoles utilisés, un type peut suffire à identifier les fonctions ou variables d'état supportées, comme par exemple dans le protocole IO homecontrol, ou des fonctions ou groupes de fonctions ou variables ou groupes de variables d'états doivent être listées, comme par exemple dans le protocole Zwave.

Alternativement, l'unité de gestion Sv peut identifier une correspondance entre un type P1TD1, P1TD2 de dispositif domotique selon le premier protocole de communication local P1 et un type P2TD1, P2TD2 de dispositif domotique selon le deuxième protocole de communication local P2.

Les règles de conversion peuvent être stockées dans une ou plusieurs tables de correspondance, comprises dans une base de connaissance.

Dans le cas où une telle règle de conversion n'est pas disponible, l'unité de gestion Sv peut procéder à son obtention, par exemple en procédant à un téléchargement à partir d'un serveur tiers. Par la suite la ou les règles de conversion peuvent être enregistrées dans une étape EcfSv6.

La mise en place de la conversion d'une fonction peut également comprendre une étape de définition d'une action à réaliser au moins partiellement par l'unité de gestion Sv ou l'unité centrale de commande U en correspondance avec une fonction selon le deuxième protocole correspondant à un identifiant de localisation, ou encore la limitation de la fonction demandée ou l'interdiction d'une fonction à réaliser. Alternativement, les définitions correspondantes peuvent être prédéfinies dans la table de correspondance ou base de connaissance.

La conversion des fonctions ou variables d'état peut être alternativement mise en oeuvre dans le cadre du procédé de commande et/ou de supervision.

Des exemples de conversion ou de réalisation partielle par l'unité de gestion ou l'unité centrale de commande sont donnés ultérieurement dans le cadre de la description du procédé de commande ou de supervision.

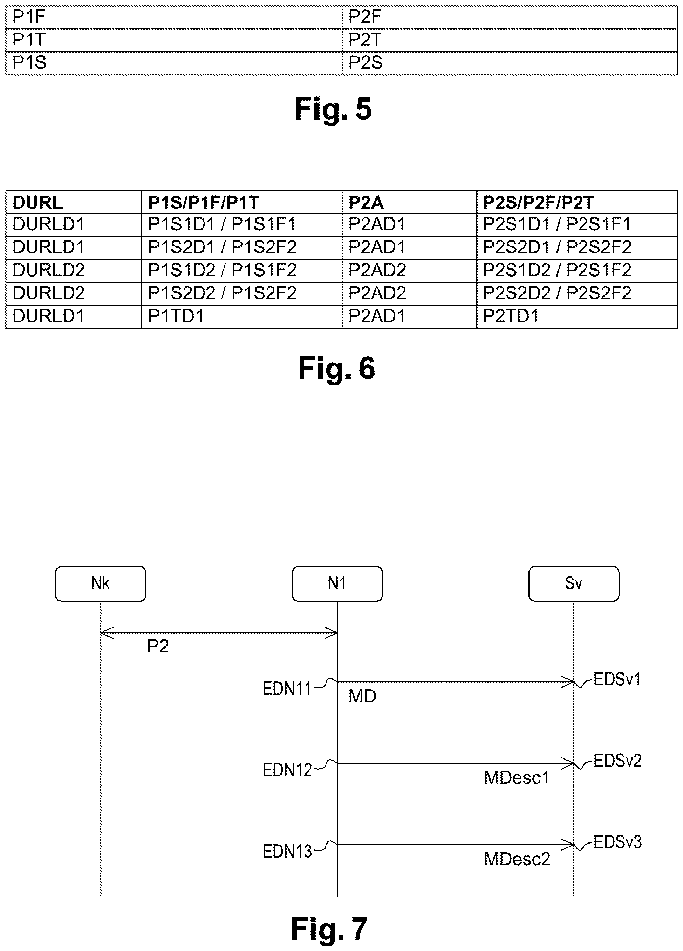

Dans une étape ECfSv7, l'unité de gestion Sv enregistre la correspondance entre l'identifiant unique de dispositif domotique DURL de l'au moins un dispositif domotique D1, D2 selon le premier protocole de communication et l'identifiant de localisation P2AD1, P2AD2 de l'au moins un dispositif domotique D1, D2 selon le second protocole de communication P2 dans une table de noeuds illustrée à la figure 6 ;

Dans une étape EcfSv8, l'unité de gestion Sv enregistre également dans la table de noeuds :

- l'au moins un type P2TD1, P2TD2 de l'au moins un dispositif domotique D1, D2 ; et/ou
- l'au moins une définition d'une fonction P1F1D1, P1F2D1, P1F1D2, P1F2D2 ou d'un groupe de fonctions de l'au moins un dispositif domotique D1, D2 et/ou de l'au moins une définition d'une variable d'état P1S1D1, P1S2D1, P1S1D2, P1S2D2 ou d'un groupe de variables d'états de l'au moins un dispositif domotique D1, D2 ;
- et/ou d'une règle de conversion de fonction RCFX agencée pour convertir la définition de l'au moins une fonction P1F1D1, P1F2D1, P1F1D2, P1F2D2 ou groupe de fonction selon le premier protocole de communication P1 en au moins une définition d'une fonction P2F1D1, P2F2D1, P2F1D2, P2F2D2 ou d'un groupe de fonction selon le second protocole de communication cible P2
- et/ou d'une règle de conversion d'état RCSX agencée pour convertir la définition de l'au moins une variable d'état P1S1D1, P1S2D1, P1S1D2, P1S2D2 selon le premier protocole de communication P1 en au moins une définition d'une variable d'état P2S1D1, P2S2D1, P2S1D2, P2S2D2 selon le second protocole de communication cible P2.

Une fois les étapes du procédé de configuration réalisées, le dispositif domotique D1 est virtualisé. L'unité de gestion Sv peut agir pour le compte de D1 sur le réseau R2.

**Variantes**

Selon une variante, un groupe de dispositif peut être identifié par un même identifiant de localisation selon le deuxième protocole. La table de correspondance comprend dans ce cas plusieurs identifiant de localisation selon le premier protocole de communication qui correspondent au même identifiant de localisation selon le second protocole de communication. Ces dispositions permettent d'envisager une configuration d'un groupe de dispositif commandable comme un seul dispositif, de façon performante par un seul appel de fonction.

Selon une variante, le procédé comprend une pluralité d'étape de réception de messages de configuration correspondant à une pluralité de premiers protocoles de communication.

Selon une variante, le procédé comprend une pluralité d'étape d'émission de message de découverte selon une pluralité de premiers protocoles de communication.

Selon une variante, le procédé comprend une pluralité de correspondance entre un dispositif communiquant selon le premier protocole de communication et des identifiants de localisation selon plusieurs deuxièmes procédés de commande.

Selon une variante, en fonction du premier protocole de communication P1 considéré, il peut être nécessaire pour l'unité de gestion Sv d'envoyer un message d'inscription MI dans une étape ECfSv5' afin de s'abonner à des notifications relatives à au moins une variable d'état d'au moins un dispositif domotique D1, D2, l'unité centrale de commande à laquelle sont rattachés les dispositifs domotiques recevant ce message respectivement dans des étapes EcfD15', EcfD25'. Ainsi des notifications concernant les variables d'état seront communiquées à l'unité de gestion dans le cadre d'un procédé de supervision.

**Obtention d'un identifiant de localisation selon le second protocole de communication cible**

L'obtention d'un identifiant de localisation selon le second protocole de communication cible, c'est-à-dire d'un identifiant unique dans le réseau étendu considéré va à présent être décrite selon deux mode de mise en oeuvre.

Dans le cas du premier protocole de communication, il est notamment possible d'utiliser comme identifiant de localisation une adresse dans un format propriétaire correspondant au protocole domotique utilisé.

Dans le cas du deuxième protocole cible, un identifiant de localisation peut notamment être une adresse réseau, comme par exemple une adresse IPv4 ou IPv6, ou encore une composition d'une adresse réseau et d'un identifiant de resource indiqué par un chemin d'accès, par exemple sous la forme de l'URL suivante :

<protocol>://<host address>[:<port>]/<resource path>

Nous décrivons ci-dessous deux modes de mise en oeuvre dans lequel l'identifiant de localisation correspond respectivement à une adresse réseau ou à une combinaison d'une adresse réseau et d'une ressource.

Selon un premier mode de mise en oeuvre, le second protocole de communication cible implique l'utilisation d'adresses réseau distinctes pour les dispositifs domotiques. L'identifiant de localisation correspond dans ce cas à une adresse réseau.

Selon une première possibilité, l'adresse réseau est choisie dans un bloc d'adresses libres assigné au Serveur Sv. Par exemple, dans le cas du protocole IPv6, un préfixe est associé à l'interface de communication du Serveur Sv sur le réseau R2, le reste de l'adresse (suffixe) étant laissé à la discrétion du Serveur Sv. Dans le cas d'un réseau étendu tel que l'Internet, ce préfixe peut définir un bloc d'adresses globales unicast et devra être préalablement obtenu auprès d'un fournisseur agréé.

Selon une deuxième possibilité l'adresse réseau est égale à, ou contient l'adresse physique du dispositif, comme par exemple dans le cas d'un protocole IPv6 utilisé en mode Link-local. Dans ce cas, dans une première étape, l'unité de gestion Sv détermine une adresse physique unique pour le dispositif D1 à émuler.

Selon un premier exemple, dans le cas d'un protocole basé sur le protocole IP, l'unité de gestion Sv peut choisir une adresse MAC dans une plage acquise préalablement auprès de l'organisme d'enregistrement IEEE, l'adresse correspondant à une composition :

Company_id + suffixe libre

Dans laquelle :

- company_id correspond à un identifiant de constructeur par exemple sur 3 octets ;
- suffixe libre, correspond à un identifiant unique du dispositif D1 sur le réseau R2, par exemple sur 3 octets. Pour une unité de gestion Sv qui pourrait émuler jusqu'à 255 dispositifs domotiques, il suffit dans ce cas de faire varier le dernier octet pour identifier les dispositifs domotiques D.

Dans une seconde étape, l'unité de gestion Sv détermine une adresse réseau unique à partir de l'adresse physique.

Selon certains deuxièmes protocoles cibles P2, l'adresse réseau est obtenue en appliquant une transformation injective à partir de l'adresse physique, comme par exemple dans le cas du protocole IPv6 Link-local, dans lequel l'adresse réseau est construite à partir de l'adresse MAC.

Selon une troisième possibilité, l'adresse réseau est obtenue d'un contrôleur de réseau sur présentation d'une adresse physique. A titre d'exemple, cela peut être le cas dans un protocole au dessus d'IP.

Selon cette troisième possibilité, dans une première étape, l'unité de gestion détermine une adresse physique unique pour le dispositif D1 à émuler, de façon similaire à la première possibilité évoquée. Dans une seconde étape, l'unité de gestion Sv obtient une adresse réseau unique sur le réseau R2 auprès d'un contrôleur de réseau à partir de l'adresse physique. A titre d'exemple, le contrôleur réseau peut être un Serveur DHCP pour IPv4 ou IPv6.

Selon un second mode de mise en oeuvre, l'adresse réseau peut être mutualisable pour plusieurs dispositifs domotiques D1, D2. Dans ce cas l'identifiant de localisation correspond à une composition d'une adresse réseau et d'un identifiant de ressource indiqué par un chemin d'accès. Dans ce cas, il peut être suffisant d'obtenir une adresse réseau pour l'unité de gestion Sv.

Les différents dispositifs domotiques sont alors associés à des ressources différentes correspondant à des chemins d'accès distincts. A titre d'exemple, en considérant un protocole du type OIC/Iotivity, en obtenant pour l'unité de gestion Sv une adresse 192.168.0.2, il est possible d'affecter les identifiants de deux dispositifs de type éclairage de la façon suivante:

oc://192.168.0.2:1234/light/1
oc://192.168.0.2:1234/light/2

La ressource /light/1 est assignée au premier dispositif de type éclairage. La ressource /light/2 est assignée au deuxième dispositif de type éclairage.

## Identifiant unique d'un dispositif domotique

L'unité de gestion Sv et les unités centrales de commandes U peuvent utiliser un identifiant unique DURL pour identifier les dispositifs domotiques. La structure d'un identifiant unique d'un dispositif domotique DURL va être à présent décrite de façon correspondante à un mode de réalisation particulier.

Selon ce mode de réalisation, l'identifiant unique d'un dispositif domotique comprend des informations sur :

- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemId si le dispositif appartient à un groupe de dispositifs D associés à une même adresse. Les dispositifs qui sont une expression unique d'une adresse ne présentent pas d'extension d'identification d'un sous-système.

Ainsi, la forme de l'identifiant unique d'un dispositif DURL peut être la suivante :
<protocol>://<gatewayId>/<rawDeviceAddress>(#<subsystemId>)
Dans laquelle les champs suivants sont présents :

protocol : identifiant du protocole local de dispositif natif;
gatewayId : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemId : ce champ optionnel indique une identification, par exemple un rang du sous-système (démarrant par exemple à 1), si un tel sous-système est présent.

### Exemples

1) knx://0201-0001-1234/1.1.3

Cet identifiant unique DURL correspond à un dispositif D communiquant par le protocole KNX avec une adresse individuelle 1.1.3 accessible par l'unité centrale de commande U portant l'identifiant #0201-0001-1234.

2) io://0201-0001-1234/145036#2

Cet identifiant unique DURL correspond à un sous-système portant le n°2 associé à un dispositif D communiquant par le protocole IO homecontrol avec une adresse radio 145036 accessible par l'unité centrale de commande U portant l'identifiant #0201-0001-1234.

### Variante

Selon une variante, l'étape d'obtention de l'identifiant de localisation peut correspondre à une réception d'une saisie par l'utilisateur d'un identifiant de localisation selon le deuxième protocole de communication comme cela est représenté sur la figure 4 par l'étape ECfSv2'.
Selon une variante, l'étape de réception d'un message de configuration comprend une déclaration par l'utilisateur de l'identifiant de localisation selon le premier protocole de communication et/ou une déclaration par l'utilisateur d'au moins une fonction ou d'un type de dispositif selon le premier protocole de communication comme cela est représenté sur la figure 4 par l'étape ECfSv2'.

### Procédé de découverte

Nous allons à présent décrire un mode de réalisation d'un procédé de découverte d'une installation domotique Su en référence à la figure 7. Nous supposerons ici que le procédé de configuration tel que décrit à la figure 4 a été précédemment exécuté, afin d'obtenir la configuration représentée sur la figure 3.
Le procédé est exécuté par l'unité de gestion Sv. Seul deux noeuds N1, Nk communiquant selon le deuxième protocole de communication cible P2 sur le réseau R2 sont représentés sur la figure 7. Toutefois, un seul noeud ou un nombre supérieur à deux noeuds peut également être considéré.
Dans une étape EDSv1, l'unité de gestion Sv reçoit un message de découverte MD selon le second protocole de communication P2 émis par un noeud N1 dans une étape EDN11.
Le message de découverte EDN11 peut comprendre un critère de filtrage sur la base par exemple d'un identifiant de localisation ou d'un groupe d'identifiants de localisation ou encore sur la base d'une information relative à une installation Su et/ou à un compte d'un utilisateur Usr et/ou à un type de produits.

Le message de découverte EDN11 peut être adressé à un identifiant de localisation ou adresse spécifique sur l'unité de gestion Sv correspondant à un identifiant de localisation d'un registre.

Dans une étape EDSv2, l'unité de gestion Sv envoie un premier message d'annonce de compatibilité et de description MDesc1 selon un deuxième protocole de communication cible P2 en relation avec l'identifiant de localisation P2AD1 du premier dispositif domotique D1 et comprenant :

- un type P2TD1 du dispositif domotique D1 ou
- au moins une description d'une fonction P2F1D1, P2F2D1 selon le deuxième protocole de communication P2 et/ou
- au moins une description d'une variable d'état P2S1D1, P2S2D1 du dispositif domotique D1 selon le deuxième protocole de communication P2.

De la même façon, l'unité de gestion envoie dans une étape EDSv3 un deuxième message d'annonce de compatibilité et de description MDesc2 selon le deuxième protocole de communication cible P2 en relation avec l'identifiant de localisation P2AD2 du deuxième dispositif domotique D2 et comprenant :

- un type P2TD2 du dispositif domotique D2 ou
- au moins une description d'une fonction P2F1D2, P2F2D2 selon le deuxième protocole de communication P2 et/ou

d'au moins une variable d'état P2S1D1, P2S2D1 du dispositif domotique D1 selon le deuxième protocole de communication P2.

Ainsi, Une publication d'un identifiant de localisation selon le second protocole cible de communication est réalisée pour des dispositifs domotiques D1, D2 qui ne sont capables de communiquer que selon un protocole local ou propriétaire.

Dans ce mode de mise en oeuvre, les messages d'annonce de compatibilité et de description sont confondus.

Ils peuvent également être distincts. L'unité de gestion peut ainsi envoyer :

- dans un premier temps un message d'annonce de compatibilité ou de déclaration d'existence en relation avec un identifiant de localisation P2AD1, d'un premier dispositif domotique D1 à destination d'au moins un noeud N1 communiquant selon le protocole de communication cible P2, puis
- un message de description selon le deuxième protocole de communication cible P2 en relation avec un type P2TD1 du dispositif domotique D1 ou au moins une description d'une fonction P2F1D1, P2F2D1 ou d'un groupe de fonction selon le deuxième protocole de communication P2 et/ou d'au moins une variable d'état P2S1D1, P2S2D1 ou d'un groupe de variable d'état du dispositif domotique D1 selon le deuxième protocole de communication P2.

**Variante**

Selon une variante, l'unité de gestion Sv peut vérifier périodiquement la disponibilité des dispositifs domotiques et n'envoyer des messages de description et/ou de déclaration d'existence qu'en cas de disponibilité du dispositif domotique concerné.

**Procédé de commande**

**Premier mode de mise en oeuvre**

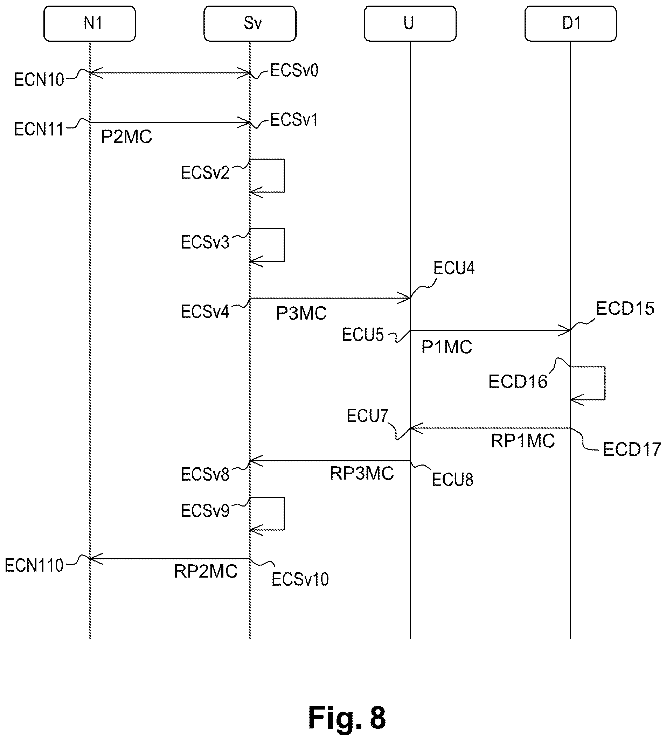

Nous allons à présent décrire un premier mode de réalisation d'un procédé de commande d'une installation domotique Su en référence à la figure 8. Nous supposerons ici que le procédé de configuration tel que décrit à la figure 4 a été précédemment exécuté, afin d'obtenir la configuration représentée sur la figure 3. Nous supposerons qu'un procédé de découverte tel que décrit à la figure 7 a également été exécuté.

Le procédé de commande est exécuté par l'unité de gestion Sv. Seul un noeud N1 communiquant selon le deuxième protocole de communication cible P2 sur le réseau R2 est représenté sur la figure 8. Toutefois, un seul noeud ou un nombre supérieur à deux de noeuds peut également être considéré. De la même façon, seul un dispositif domotique D1 communiquant, par l'intermédiaire d'une unité centrale de commande U selon le premier protocole local P1 est représenté mais d'autres dispositifs peuvent être présents.

Dans une étape préalable optionnelle ECSv0, une connexion peut être établie entre le noeud entre un noeud N1 communiquant selon le deuxième protocole de communication P2 et l'unité de gestion Sv, l'unité de gestion Sv agissant sur le réseau R2 en tant que représentant virtuel des dispositifs domotiques du réseau R1 communiquant, par l'intermédiaire d'une unité centrale de commande U selon le premier protocole de communication local P1.

Dans une première étape ECSv1, l'unité de gestion Sv reçoit au moins un message de commande P2MC en provenance d'un noeud N1 communiquant selon le deuxième protocole de communication P2. Le message de commande P2MC qui est émis par le noeud N1 dans une étape ECN11 comprend au moins un identifiant de localisation P2AD1 d'un dispositif domotique D1 selon le deuxième protocole de communication cible P2 et au moins une définition d'une fonction P2F1D1 du dispositif domotique D1 selon le deuxième protocole de communication P2. Dans le cas présent, nous supposerons que le dispositif concerné par la commande est le dispositif D1 identifié par l'identifiant de localisation P2AD1, que la fonction concernée est une fonction P2F1D1 destinée à ce seul dispositif domotique.

Dans une étape ECSv2, l'unité de gestion Sv détermine un identifiant unique de dispositif domotique DURL correspondant à l'identifiant de localisation P2AD1 de l'au moins un dispositif domotique D1 selon le second protocole de communication P2 reçu dans le message de commande P2MC.

Dans une étape ECSv3, l'unité de gestion Sv applique une règle de conversion de fonction RCFX agencée pour convertir la définition de la fonction P2F1D1 selon le second protocole de communication cible P2 en au moins une définition d'une fonction P1F1D1 selon le premier protocole de communication local P1. Pour cela, l'unité de gestion Sv peut utiliser la table de correspondance renseignée lors du procédé de configuration.

L'étape d'application d'une règle de conversion peut comprendre la réalisation d'étapes de traitements complémentaires à l'appel de la commande, notamment si une partie de la fonction ne peut pas être réalisée sur le dispositif domotique, et notamment un enrichissement partiel de la fonction, ou encore la limitation de la fonction demandée ou l'interdiction d'une fonction à réaliser.

A titre d'exemple, une planification d'une commande peut être prévue si le dispositif en lui-même ne permet pas une telle planification. Ainsi, il est possible d'implémenter sur l'unité de gestion ou sur une unité centrale de commande une fonction de type « Calendar Weave » pour déclencher une commande d'ouverture le lundi à 8h00 pour un dispositif domotique de type store. Egalement à titre d'exemple, une conversion de paramètre peut être réalisée par l'unité centrale de commande.

Dans une étape ECSv4, l'unité de gestion Sv envoie au moins un message de commande P3MC selon le troisième protocole de communication P3 à destination de l'unité centrale de commande U à laquelle est rattaché l'au moins un dispositif domotique D1 correspondant à l'identifiant unique de dispositif domotique DURL et à la fonction P1F1D1 selon le premier protocole de communication local P1 qui le reçoit dans une étape ECU4.

Dans une étape ECU5, l'unité centrale de commande formate et envoie un message P1MC en reprenant les éléments contenu dans le message P3MC au dispositif domotique D1 selon le premier protocole de commande P1. Le message P1MC est reçu dans une étape ECD15.

Dans une étape ECD16, le dispositif domotique D1 exécute la fonction P1F1D1.

Dans une étape ECD17, le dispositif domotique D1 envoie un message de retour de commande RP1MC selon le premier protocole de communication P1 vers l'unité centrale de commande U qui le reçoit dans une étape ECU7. Le message contient une information de retour de commande P1RC exprimée selon le premier protocole de communication local P1.

Dans une étape ECU8, l'unité centrale de commande U envoie un message de retour de commande RP3MC selon le troisième protocole de communication P3 vers l'unité de gestion Sv qui le reçoit dans une étape ECSv8. Ce message contient l'information de retour de commande P1RC exprimée selon le premier protocole de communication local P1.

Dans une étape ECSv9, l'unité de gestion Sv applique, si nécessaire, une règle de conversion de fonction RCFX afin de convertir une information de retour de commande P1RC exprimée selon le premier protocole de communication local P1 en une information de retour de commande P2RC exprimée selon le second protocole de communication cible P2.

Dans une étape ECSv10, l'unité de gestion Sv émet au moins un message de retour de commande RP2MC à destination du noeud N1 comprenant une information de retour de commande P2RC selon le deuxième protocole cible de communication P2.

**Variantes**

Selon une variante, l'unité de gestion Sv peut recevoir un message de commande P2MC correspondant à une commande groupée destinée à un ensemble de dispositifs domotiques identifiés par un ensemble d'identifiants de localisation. Dans ce cas, une pluralité de message de commande P1MC sont envoyés aux dispositifs de commande concernés, après conversion de la fonction concernée et de l'identification de localisation pour chaque dispositif. Par la suite, l'unité gestion peut optionnellement agréger les résultats ou retour communiqués par les dispositifs domotiques D de façon à retourner un message de retour de commande P2RC unique. A titre d'exemple, il peut être convenu que la commande est réputée réalisée avec succès si toutes les réalisations de fonctions individuelles ont un retour positif, ou échouée si l'une des fonctions pour un dispositif domotique retourne une valeur d'échec.

Selon une autre variante déjà évoquée dans le cadre du procédé de configuration, un groupe de dispositif peut être identifié par un même identifiant de localisation selon le deuxième protocole. La table de correspondance comprend dans ce cas plusieurs identifiants uniques de dispositif domotiques selon le premier protocole de communication qui correspondent au même identifiant de localisation selon le second protocole de communication. Dans ce cas, il est possible de procéder comme ce qui a été évoqué précédemment pour la commande groupée. Une pluralité de fonctions selon le premier protocole de communication est envoyée aux dispositifs concernés correspondant à la pluralité d'identifiants de localisation selon le premier protocole de communication, puis les retours sont stockés puis agrégés pour retourner un seul résultat pour le message de commande considéré.

**Procédé de supervision**

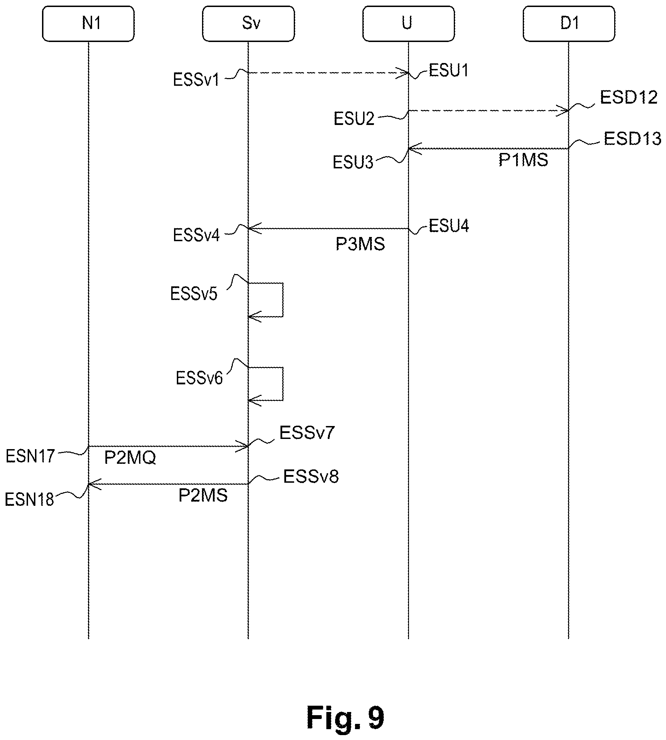

Nous allons à présent décrire un mode de réalisation d'un procédé de supervision d'une installation domotique Su en référence à la figure 9. Nous supposerons ici que le procédé de configuration tel que décrit à la figure 4 a été précédemment exécuté, afin d'obtenir la configuration représentée sur la figure 3. Nous supposerons qu'un procédé de découverte tel que décrit à la figure 7 a également été exécuté.

Le procédé de supervision est exécuté par l'unité de gestion Sv. Seul un noeud N1 communiquant selon le deuxième protocole de communication cible P2 sur le réseau R2 est représenté sur la figure 9. Toutefois, un seul noeud ou un nombre supérieur à deux de noeuds peut également être considéré. De la même façon, seul un dispositif domotique D1 communiquant, par l'intermédiaire d'une unité centrale de commande U, selon le premier protocole local P1 est représenté mais d'autres dispositifs peuvent être présents.

Dans une étape ESSv4, l'unité de gestion Sv reçoit un message de supervision P3MS selon le troisième protocole de communication P3 émis par une unité centrale de commande U à laquelle est rattaché un dispositif domotique D1 dans une étape ESU4. Le message de supervision P3MS comprenant une information relative à une valeur d'au moins un variable d'état P1S1D1 de l'au moins un dispositif domotique D1 selon le premier protocole de communication P1. L'étape ESSv2 peut être successive à une première étape ESSv1 d'envoi d'un message d'interrogation ou de polling, reçu par l'unité centrale de commande U à laquelle est rattaché le dispositif domotique D1 dans une étape ESU1. Alternativement, l'envoi d'un message P1MS peut être initié par le dispositif domotique D1 dans une étape ESD13 ou l'unité centrale de commande U de façon autonome, par exemple en détectant un évènement modifiant la valeur d'une variable d'état P1S1D1. Une étape ESU2 d'envoi d'un message d'interrogation ou de polling peut être également mise en oeuvre par l'unité centrale de commande U à destination du dispositif domotique D en vue de repérer par exemple un changement de valeur d'une variable d'état P1S1D1.

L'envoi du message P1MS peut être réalisé de façon indifférenciée à un ensemble de noeud présent sur le réseau communiquant selon le premier protocole de communication. Cette disposition correspond à mode dit « Broadcast ». Selon un mode de mise en oeuvre alternatif, le dispositif domotique peut envoyer le message de supervision seulement aux noeuds inscrits sur le réseau établi selon le premier protocole de communication, et en particulier à l'unité centrale de commande U si celle-ci est inscrite. Dans ce cas, l'unité centrale de commande U réalise une étape préalable d'envoi, à destination du dispositif domotique D1, d'une demande d'enregistrement dans une liste de souscription à un évènement relatif à l'au moins une variable d'état P1S1D1 du dispositif domotique D1.

Dans une étape ESSv5, l'unité de gestion Sv applique une règle de conversion d'état RCSX afin de convertir l'au moins une information relative à une valeur d'au moins un variable d'état P1S1D1 de l'au moins un dispositif domotique D1 exprimée selon le premier protocole de communication local P1 en une valeur d'au moins un variable d'état P2S1D1 du dispositif domotique D1 exprimée selon le second protocole de communication cible P2.

Dans une étape ESSv6, l'unité de gestion Sv détermine un identifiant de localisation P2AD1 du dispositif domotique P2AD1 selon le deuxième protocole de communication P2 sur la base de l'identifiant unique DURL de dispositif domotique D1 contenu dans le message P3MS ou déterminable sur la base d'éléments d'identification contenus dans ce message. Les étapes les étapes ESSv5 et ESSv6 d'application d'une règle de conversion et de détermination d'adresse ou d'identifiant peuvent être réalisées séquentiellement dans un ordre indifférent ou simultanément.

Dans une étape ESSv7, l'unité de gestion Sv envoi un message de supervision P2MS à destination du noeud N1 communiquant selon un deuxième protocole de communication P2, le message de supervision P2MS comprenant une information relative à une valeur d'au moins un variable d'état P2S1D1 du dispositif domotique D1 selon le deuxième protocole cible de communication P2 et étant en relation avec l'identifiant de localisation P2AD1 du dispositif domotique D1 selon le deuxième protocole de communication P2.

Selon une possibilité, l'envoi du message de supervision P2MS peut être réalisé à l'initiative de l'unité de gestion Sv de façon spontanée ou suite à la réception d'un message de supervision P3MS en provenance d'une unité centrale de commande U à laquelle est rattachée un dispositif domotique D1. Selon une autre possibilité, le message de supervision P2MS peut être envoyé suite à la réception par l'unité de gestion Sv dans une étape ESSv5 d'un message de requête MQ émis dans une étape ESN15 en provenance d'un noeud N1 du réseau étendu R2. Selon cette deuxième possibilité, l'unité de gestion Sv comprend un espace ou base de stockage des valeurs de variables d'état pour les dispositifs domotiques qui lui sont rattachés.

Dans le cadre d'un envoi direct à l'initiative de l'unité de gestion Sv, l'envoi du message de supervision P2MS peut être réalisé de façon indifférenciée à un ensemble de noeud présent sur le réseau communiquant selon le second protocole de communication P2. Cette disposition correspond à un mode de diffusion dit « Broadcast ». Selon un mode de mise en oeuvre alternatif, l'unité centrale de commande peut envoyer le message de supervision seulement aux noeuds du réseau R2 enregistrés dans une liste de souscription, et en particulier au noeud N1. Dans ce cas, le noeud N1 réalise une étape préalable d'envoi à destination de l'unité de gestion Sv d'une demande d'enregistrement dans une liste de souscription à un évènement relatif à l'au moins une variable d'état P2S1D1 du dispositif domotique D1.

**Variante**

Selon une variante, le procédé de supervision peut être adapté à un point de commande. Dans ce cas, la commande est identifiée et est notifiée à l'unité de gestion comme une modification d'une variable d'état.

Selon une variante, l'étape de polling ESSv1 mentionnée précédemment permet de mettre en oeuvre une émulation de mode événementiel pour un dispositif ou une unité centrale de commande U n'offrant pas une telle fonctionnalité, dans lequel l'unité de gestion Sv peut consulter périodiquement les valeurs de variables d'état des dispositif par l'intermédiaire d'une unité centrale de commande U, détecter les modifications de valeurs de variables d'état en comparant la dernière valeur obtenue et la ou les données qu'elle a préalablement stockées et envoyer, en cas de modification, un message de supervision P2MS relatif à la variable d'état modifiée à destination d'un noeud N1 abonné aux modifications de cette variable d'état.

**Exemples**

***Exemple 1***

Dans cet exemple, on considère un dispositif domotique D1 de type capteur de température. Ce capteur communique selon un premier protocole local P1 de type IO-homecontrol et est destiné à être rendu accessible en tant que capteur selon le deuxième protocole de communication P2 utilisant une couche applicative de type OIC/Iotivity et une couche de transport de type CoAP sur IPv6 par l'unité de gestion Sv.

Le procédé de configuration peut être mis en oeuvre de la façon suivante.

Lors du procédé d'appairage du capteur IO-homecontrol à l'unité centrale de commande U, le dispositif domotique D est décrit comme un capteur IO système de type 0x03 (outside température sensor, unité: °K) avec un identifiant de localisation selon le premier protocole P1 sous forme d'une adresse réseau IO 0x485670.

L'unité centrale de commande U s'inscrit auprès du dispositif domotique D (capteur IO) pour recevoir des événements relatifs à la variation de la température mesurée, ce qui correspond à une variable d'état P1S1 du dispositif.

L'unité centrale de commande U procède ensuite à la transmission selon le troisième protocole de communication P3 de ces informations vers l'unité de gestion Sv, ce qui correspond à une étape ECfD13, en particulier l'identifiant de localisation P1AD1 de ce dispositif selon le protocole P1 et le type du dispositif D1.

L'unité de gestion Sv procède alors à la détermination automatique d'un type ou profil Iotivity standard à utiliser pour publier ce dispositif en utilisant une table de correspondance en fonction du protocole P1 et du type de produit afin de déterminer une règle de conversion dans une étape ECfv6.

L'unité de gestion Sv procède ensuite à la détermination d'un identifiant de localisation P2AD1 selon le protocole P2, en l'occurrence une adresse IPv6 libre pour le dispositif, correspondant à l'étape ECfsv5. En particulier, cette adresse réseau peut être choisie arbitrairement dans un préfixe IPv6 pré-assigné à l'unité de gestion. Par exemple, l'unité de gestion Sv choisit d'assigner l'adresse IPv6 2001:0db8:3c4d:0015:0000:0000:abcd:ef13 pour représenter le dispositif domotique D1 sous forme d'un « avatar » sur le réseau R2.

L'unité de gestion Sv procède dans une étape ECfsv7 à l'enregistrement de la correspondance du type de dispositif selon le premier et le second protocole P2 et d'un identifiant unique de dispositif DURL dans la table des noeuds.

Un procédé de découverte peut alors être mis en oeuvre si le second protocole P2 le permet. Dans le cas contraire (par exemple dans le cas d'une adresse IPv6 publiée sur Internet), l'adresse P2AD1 choisie pour l'avatar du dispositif D1 peut être publiée dans un registre de noms ou à travers une API de recherche qui permettra à l'utilisateur de prendre connaissance de cette adresse.

Le procédé de supervision ou de commande peut ensuite être mis en oeuvre.

Ainsi, un événement IO radio émis par le capteur associé à un identifiant de localisation selon le premier protocole de communication P1 - ici une adresse IO 0x485670 - sous forme d'un message P1MS dans une étape ESD13 est reçu dans une étape ESU3 par l'unité centrale de commande U.

L'unité centrale de commande U remonte l'information par l'envoi d'un message P3MS selon le troisième protocole de communication P3 dans une étape ESU4 vers l'unité de gestion Sv qui le reçoit dans une étape ESSv4 et va déterminer l'identifiant de localisation correspondant selon le second protocole de communication P2 en utilisant la table des noeuds dans une étape ESSv6.

Dans une étape ESSv5, l'unité de gestion Sv détermine si la variable d'état de température P1S1D1 possède une correspondance dans le profil Iotivity associé au dispositif virtuel et la fonction de conversion éventuelle. Dans l'exemple considéré, la variable d'état température en degrés Kelvin du dispositif domotique D1 peut être adaptée sur une notification rattachée à la variable d'état P2S1D1 représentant la température en degrés Celsius.

L'unité de gestion Sv applique la fonction de conversion suivante qui correspond à une conversion en degrés Celsius et en une valeur entière avec une précision de 0.01 :

$$T \rightarrow floor((T-273.15)*100).$$

L'unité de gestion Sv peut alors conserver cette valeur afin de pouvoir répondre à une demande ultérieure sur le deuxième protocole P2, par exemple une requête CoAP de type « GET » ou envoyer un message de supervision P2MS à d'éventuels clients ayant souscrit au préalable aux événements du dispositif D1 par une requête CoAP de type « OBSERVE », sous forme d'un message de notification CoAP au noeud N1 connecté contenant la nouvelle valeur de température P2S1D1 dans une étape ESSv7.

Selon une variante utilisant le procédé de commande, une lecture active de la température peut être réalisée.

Dans ce cas, le noeud N1 qui est un client Iotivity envoie une requête de lecture à l'unité de gestion Sv concernant la variable d'état ou caractéristique « Température » du dispositif virtuel, dans une étape ESN11. Le message de commande P2MC émis par le noeud N1 comprend un identifiant de localisation P2AD1 d'un dispositif domotique D1 selon le deuxième protocole de communication cible P2 et une définition d'une fonction P2F1D1 du dispositif domotique D1 correspondant à une interrogation de la variable température selon le deuxième protocole de communication P2.

Dans une étape ECSv2, l'unité de gestion Sv détermine un identifiant unique DURL du dispositif domotique D1 correspondant à l'identifiant de localisation P2AD1 de l'au moins un dispositif domotique D1 selon le second protocole de communication P2 reçu dans le message de commande P2MC.

Dans une étape ECSv3, l'unité de gestion Sv applique une règle de conversion de fonction RCFX agencée pour convertir la définition de la fonction P2F1D1 selon le second protocole de communication cible P2 en au moins une définition d'une fonction P1F1D1 selon le premier protocole de communication local P1. L'unité de gestion Sv peut répondre en utilisant la dernière valeur reçue du capteur IO ou envoyer une commande au dispositif en passant par la centrale de commande U pour obtenir cette valeur. Ainsi, dans une étape ECSv4, l'unité de gestion Sv envoie un message de commande P3MC selon le troisième protocole de communication P3 à destination de l'unité centrale de commande U à laquelle est rattaché l'au moins un dispositif domotique D1 correspondant à l'identifiant unique de dispositif DURL et à la fonction P1F1D1 selon le premier protocole de communication local P1 qui le reçoit dans une étape ECU4.

Dans une étape ECU5, l'unité centrale de commande formate et envoie un message P1MC en reprenant les éléments contenus dans le message P3MC au dispositif domotique D1 selon le premier protocole de commande P1. Le message P1MC est reçu dans une étape ECD15.

Dans une étape ECD16, le dispositif domotique D1 exécute la fonction P1F1D1 et renvoie dans ce cas une valeur de température.

Dans une étape ECD17, le dispositif domotique D1 envoie un message de retour de commande RP1MC selon le premier protocole de communication P1 vers l'unité centrale de commande U qui le reçoit dans une étape ECU7. Le message contient une information de retour de commande P1RC correspondant à la température.

Dans une étape ECU8, l'unité centrale de commande U envoie un message de retour de commande RP3MC selon le troisième protocole de communication P3 vers l'unité de gestion Sv qui le reçoit dans une étape ECSv8. Ce message contient l'information de retour de commande P1RC exprimée selon le premier protocole de communication local P1.

Dans une étape ECSv9, l'unité de gestion Sv applique une règle de conversion de fonction RCFX afin de convertir une information de retour de commande P1RC exprimée selon le premier protocole de communication local P1 en une information de retour de commande P2RC exprimée selon le second protocole de communication cible P2.

Dans une étape ECSv10, l'unité de gestion Sv émet au moins un message de retour de commande RP2MC à destination du noeud N1 comprenant une information de retour de commande P2RC selon le deuxième protocole cible de communication P2 qui correspond à la température.

***Exemple 2***

Selon un deuxième exemple, un dispositif domotique D1 de type micromodule pour volet roulant Yokis est considéré. Ce dispositif domotique D1 communique selon un protocole de communication P1 radio propriétaire du fabricant. Ce dispositif domotique peut communiquer avec une unité centrale de commande U disposant d'un émetteur/récepteur adéquat. On désire publier un avatar de ce dispositif sur un réseau étendu tel que l'Internet à l'aide de l'unité de gestion Sv, en utilisant un deuxième protocole de communication P2 basé sur des messages au format JSON dans une encapsulation MQTT et un transport TCP sur IPv6.

Dans le cadre de cet exemple, l'unité de gestion Sv peut être un serveur accessible sur Internet et l'unité centrale de commande U peut être un boîtier domotique connecté à l'unité de gestion par une connexion TCP établie de façon permanente à travers le réseau local de l'utilisateur et sa passerelle Internet, par exemple un modem ADSL.

Le procédé de configuration suivant peut être mis en oeuvre.

Dans une première étape d'appairage du micromodule à l'unité centrale de commande l'unité centrale de commande U obtient l'adresse unique du module selon le protocole P1, par exemple 0x2A370.

Dans une étape ECfD13, cette adresse et le type du dispositif découvert sont transmis par l'unité centrale de commande U sous la forme d'un message JSON qui fait office de troisième protocole P3 à l'unité de gestion Sv qui reçoit ce message dans une étape ECfSv3.

Dans une étape ECfv5, l'unité de gestion Sv détermine une adresse IPv6 disponible dans un bloc d'adresses préalablement obtenu, par exemple l'adresse IPv6 2001:0db8:3c4d:0015:0000:0000:abcd:0644.

Dans une étape ECfv7, l'unité de gestion enregistre la correspondance entre l'identifiant du dispositif DURL - constitué de l'identifiant de la centrale de commande U, de l'adresse de D1 selon le protocole P1 - et l'adresse IPv6 choisie dans une table de correspondance. L'unité de gestion se met aussi en écoute sur cette adresse réseau si nécessaire, afin de pouvoir recevoir des messages à destination de l'avatar du dispositif.

Dans une étape ECfv8, l'unité de gestion enregistre également un type du dispositif domotique.

| Type de dispositif | DURL | P2AD1 |
|---|---|---|
| MVR500ERP | yokis://0201-0001-1234/2A370 | 2001:0db8:3c4d:0015:0000:0000:abcd:0644 |

Exemple de table de correspondance

Le procédé de commande suivant peut alors être mis en oeuvre.

Dans une étape ECN11, une application de pilotage exécutée sur un noeud N1, par exemple par un autre dispositif domotique connecté à Internet, par un dispositif ou un serveur de commande, envoie un message de commande P2MC à l'adresse IPv6 de l'avatar du dispositif D1 selon le protocole P2 qui le reçoit dans une étape ECSv1. Le message de commande peut correspondre par exemple à une demande d'ouverture du volet roulant.

Dans une étape ECSv2, l'unité de gestion Sv détermine à partir de la table de correspondance établie lors de la phase de configuration une identification du dispositif domotique concerné par l'identifiant unique de dispositif domotique DURL.

Cet identifiant contient l'identifiant de l'unité centrale de commande U qui peut contrôler le dispositif ainsi que le protocole P1, le type et l'adresse du dispositif D1 selon ce protocole.

Dans une étape ECSv3, l'unité de gestion Sv convertit la commande au format attendu par le dispositif D1 selon le premier protocole de communication P1 soit une commande UP, puis transmet dans une étape ECSv4 cette information sous forme d'un message de commande P3MC à l'unité centrale de commande U associée selon le troisième protocole de communication P3, l'unité centrale de commande recevant ce message dans une étape ECU4.

Dans une étape ECU5, l'unité centrale de commande U retransmet l'ordre vers le micromodule sous forme d'un message de commande P1MC en utilisant le premier protocole de communication P1, ici le protocole radio Yokis, qui reçoit ce message dans une étape ECD15.

Dans une étape ECD16, le micromodule exécute la commande et met en mouvement le volet roulant vers le haut.

Dans une étape ECD17, le micromodule renvoie un message de confirmation RP1MC indiquant qu'il a bien pris en compte la commande à l'unité centrale de commande U, qui le reçoit dans une étape ECU7.

Dans une étape ECU8, l'unité centrale de commande U renvoie cette information avec l'identifiant du dispositif D1 à l'unité de gestion Sv dans un message RP3MC selon le troisième protocole à l'unité de gestion Sv qui le reçoit dans une étape ECSv8.

Dans une étape ECSv9, l'unité de gestion Sv, à l'aide de la table de correspondance établie durant la phase de configuration, convertit le code retour de la commande, puis dans une étape ECSv10, renvoie un message RP2MC sur le réseau R2 en utilisant l'adresse source P2AD1 et à destination du noeud N1 en indiquant la bonne prise en compte de la commande initiée par le noeud N1..

**Revendications**

1. Procédé de configuration d'une installation domotique (Su) comprenant au moins un dispositif domotique (D1, D2) et au moins une unité centrale de commande (U), l'au moins un dispositif domotique (D1, D2) étant susceptible de communiquer avec l'au moins une unité centrale de commande (U) par l'intermédiaire d'au moins un premier protocole (P1), le procédé étant exécuté par une unité de gestion (Sv) connectée à distance à l'installation domotique (Su) par l'intermédiaire d'un réseau étendu et susceptible de communiquer avec l'au moins une unité centrale de commande (U); le procédé comprenant les étapes suivantes :

   - Réception (EcfSv3, EcfSv4, ECfSv2'), en provenance de l'au moins une unité centrale de commande (U) ou d'un utilisateur (Usr/T), d'au moins un message de configuration (MCfDI, MCfD2, MCfUsr) relatif à au moins un dispositif domotique (D1, D2) et à au moins une définition d'une fonction (P1F1D1, P1F2D1, P1F1D2, P1F2D2) ou d'un groupe de fonctions de l'au moins un dispositif domotique (D1, D2) selon ledit premier protocole de communication (P1) ;
   - Obtention (EcfSvS) d'un identifiant de localisation (P2AD1, P2AD2) de l'au moins un dispositif domotique (D1, D2) selon un second protocole de communication cible (P2) ;
   - Enregistrement (ECfSv7) de la correspondance entre l'identifiant de localisation (P2AD1, P2AD2) de l'au moins un dispositif domotique (D1, D2) selon le second protocole de communication (P2) et d'au moins un élément d'identification (DURL) contenu dans le message de configuration ou déterminable à réception du message de configuration dont le contenu ou la combinaison permet une identification unique d'un dispositif domotique (D1) ;
   - Enregistrement (EcfSv8) de l' au moins une définition d'une fonction (P1F1D1, P1F2D1, P1F1D2, P1F2D2) ou d'un groupe de fonctions de l'au moins un dispositif domotique (D1, D2) selon ledit premier protocole de communication (P1) relative à l'au moins un message de configuration (MCfDI, MCfD2, MCfUsr) reçu en provenance de l'au moins une unité centrale de commande (U) ou d'un utilisateur (Usr/T) et d'une règle de conversion de fonction agencée pour convertir la définition de l'au moins une fonction (P1F1D1, P1F2D1, P1F1D2, P1F2D2) ou d'un groupe de fonctions de l'au moins un dispositif domotique (D1, D2) selon le premier protocole de communication (P1) en au moins une définition d'une fonction (P2F1D1, P2F2D1, P2F1D2, P2F2D2) ou d'un groupe de fonctions de l'au moins un dispositif domotique (D1, D2) selon le second protocole de communication cible (P2).

2. Procédé de configuration d'une installation domotique (Su) comprenant au moins un dispositif domotique (D1, D2) et au moins une unité centrale de commande (U), l'au moins un dispositif domotique (D1, D2) étant susceptible de communiquer avec l'au moins une unité centrale de commande (U) par l'intermédiaire d'au moins un premier protocole (P1), le procédé étant exécuté par une unité de gestion (Sv) connectée à distance à l'installation domotique (Su) par l'intermédiaire d'un réseau étendu et susceptible de communiquer avec l'au moins une unité centrale de commande (U); le procédé comprenant les étapes suivantes :

   - Réception (EcfSv3, EcfSv4, ECfSv2'), en provenance de l'au moins une unité centrale de commande (U) ou d'un utilisateur (Usr/T), d'au moins un message de configuration (MCfDI, MCfD2, MCfUsr) relatif à au moins un dispositif domotique (D1, D2) et à au moins une définition d'une variable d'état (P1S1D1, P1S2D1, P1S1D2, P1S2D2) ou d'un groupe de variables d'états de l'au moins un dispositif domotique (D1, D2) selon ledit premier protocole de communication (P1) ;
   - Obtention (EcfSvS) d'un identifiant de localisation (P2AD1, P2AD2) de l'au moins un dispositif domotique (D1, D2) selon un second protocole de communication cible (P2) ;
   - Enregistrement (ECfSv7) de la correspondance entre l'identifiant de localisation (P2AD1, P2AD2) de l'au moins un dispositif domotique (D1, D2) selon le second protocole de communication (P2) et d'au moins un élément d'identification (DURL) contenu dans le message de configuration ou déterminable à réception du message de configuration dont le contenu ou la combinaison permet une identification unique d'un dispositif domotique (D1) ;
   - Enregistrement (EcfSv8) de l'au moins une définition d'une variable d'état (P1S1D1, P1S2D1, P1S1D2, P1S2D2) ou d'un groupe de variables d'états de l'au moins un dispositif domotique (D1, D2) selon ledit premier protocole de communication (P1) relative à l'au moins un message de configuration (MCfDI, MCfD2, MCfUsr) reçu en provenance de l'au moins une unité centrale de commande (U) ou d'un utilisateur (Usr/T) et d'une règle de conversion d'état agencée pour convertir la définition de l'au moins une variable d'état (P1S1D1, P1S2D1, P1S1D2, P1S2D2) ou d'un groupe de variables d'états de l'au moins un dispositif domotique (D1, D2) selon le premier protocole de communication (P1) en au moins une définition d'une variable d'état (P2S1D1, P2S2D1, P2S1D2, P2S2D2) ou d'un groupe de variables d'états de l'au moins un dispositif domotique (D1, D2) selon le second protocole de communication cible (P2).

3. Procédé selon la revendication 1, comprenant en outre l'étape suivante :

- Obtention (EcfSv6) d'au moins une règle de conversion de fonction agencée pour convertir la définition de l'au moins une fonction (P1F1D1, P1F2D1, P1F1D2, P1F2D2) ou d'un groupe de fonctions de l'au moins un dispositif domotique (D1, D2) selon le premier protocole de communication (P1) en au moins une définition d'une fonction (P2F1D1, P2F2D1, P2F1D2, P2F2D2) ou d'un groupe de fonctions de l'au moins un dispositif domotique (D1, D2) selon le second protocole de communication cible (P2).
- Enregistrement (EcfSv8) de ladite au moins une règle de conversion de fonction.

4. Procédé selon la revendication 2, comprenant en outre l'étape suivante :

- Obtention (EcfSv6) d'au moins une règle de conversion d'état agencée pour convertir la définition de l'au moins une variable d'état (P1S1D1, P1S2D1, P1S1D2, P1S2D2) ou d'un groupe de variables d'états de l'au moins un dispositif domotique (D1, D2) selon le premier protocole de communication (P1) en au moins une définition d'une variable d'état (P2S1D1, P2S2D1, P2S1D2, P2S2D2) ou d'un groupe de variables d'états de l'au moins un dispositif domotique (D1, D2) selon le second protocole de communication cible (P2).
- Enregistrement (EcfSv8) de ladite au moins une règle de conversion d'état.

5. Procédé selon l'une quelconque des revendications 1 à 4, comprenant en outre l'étape suivante :

- définition d'une action à réaliser au moins partiellement par l'unité centrale de commande ou l'unité de gestion en correspondance avec une fonction selon le deuxième protocole correspondant à un identifiant de localisation ;

6. Procédé selon l'une quelconque des revendications 1 à 5, dans lequel l'étape de conversion comprend la limitation de la fonction demandée ou l'interdiction d'une commande/fonction à réaliser.

7. Procédé selon l'une quelconque des revendications 1 à 6, dans lequel l'au moins un message de configuration (MCfDI, MCfD2, MCfUsr) reçu à l'étape de réception (EcfSv3, EcfSv4, ECfSv2') est en outre relatif à un type (P1TD1, P1TD2) de l'au moins un dispositif domotique (D1, D2) et dans lequel le type (P1TD1, P1TD2) de l'au moins un dispositif domotique (D1, D2) est enregistré lors de l'étape d'enregistrement (EcfSv8).

8. Procédé de découverte d'une installation domotique (Su) configurée selon le procédé de configuration de l'une des revendications 1 à 7 et comprenant au moins un dispositif domotique (D1, D2) et au moins une unité centrale de commande (U), l'au moins un dispositif domotique (D1, D2) étant susceptible de communiquer avec l'au moins une unité centrale de commande (U) par l'intermédiaire d'au moins un premier protocole (P1); le procédé étant exécuté par une unité de gestion (Sv) connectée à distance à l'installation domotique (Su) par l'intermédiaire d'un réseau étendu et susceptible de communiquer avec l'au moins une unité centrale de commande (U); le procédé comprenant les étapes suivantes :

- Envoi (EDSv2) d'au moins un message d'annonce de compatibilité ou de description (MDesc1, MDesc2) selon un deuxième protocole de communication cible (P2) en relation avec :

◦ au moins un identifiant de localisation (P2AD1, P2AD2) de l'au moins un dispositif domotique (D1, D2) selon le second protocole de communication correspondant à un l'identifiant de localisation (P1AD1, P1AD2) de l'au moins un dispositif domotique (D1, D2) selon le premier protocole de communication (P1) ; et
◦ Optionnellement, un type (P2TD1, P2TD2) de l'au moins un dispositif domotique (D1, D2) ou au moins une description d'une fonction (P2F1D1, P2F2D1, P2F1D2, P2F2D2) ou d'un groupe de fonctions selon le deuxième protocole de communication (P2) et/ou au moins une description d'une variable d'état (P2S1D1, P2S2D1, P2S1D2, P2S2D2) ou d'un groupe de variables d'états de l'au moins un dispositif domotique (D1, D2) selon le deuxième protocole de communication (P2).

9. Procédé de commande d'une installation domotique (Su) configurée selon le procédé de configuration de l'une des revendications 1 à 7 et comprenant au moins un dispositif domotique (D1, D2) et au moins une unité centrale de commande (U), l'au moins un dispositif domotique (D1, D2) étant susceptible de communiquer avec l'unité centrale de commande (U) par l'intermédiaire d'au moins un premier protocole (P1); le procédé étant exécuté par une unité de gestion (Sv) connectée à distance à l'installation domotique (Su) par l'intermédiaire d'un réseau étendu et susceptible de communiquer avec l'au moins une unité centrale de commande (U); le procédé comprenant les étapes suivantes :

- Réception (ECSv1) d'au moins un message de commande (P2MC) en provenance d'un noeud (N1) communiquant selon un deuxième protocole de communication (P2) comprenant au moins un identifiant de localisation (P2AD1, P2AD2) d'un dispositif domotique (D1, D2) selon le deuxième protocole de communication cible (P2) et au moins une définition d'une fonction (P2F1D1, P2F2D1, P2F1D2, P2F2D2) du dispositif domotique (D1, D2) selon le deuxième protocole de communication (P2) ;
- Détermination (ECSv2) d'au moins un élément d'identification (DURL) du dispositif domotique dont le contenu ou la combinaison permet une identification unique du dispositif domotique (D1,D2) sur la base de l'identifiant de localisation (P2AD1, P2AD2) de l'au moins un dispositif domotique (D1, D2) selon le second protocole de communication (P2) ;
- Optionnellement, application (ECSv3) d'une règle de conversion de fonction agencée pour convertir la définition de l'au moins une fonction (P2F1D1, P2F2D1, P2F1D2, P2F2D2) selon le second protocole de communication cible (P2) en au moins une définition d'une fonction (P1F1D1, P1F2D1, P1F1D2, P1F2D2) selon le premier protocole de communication (P1) ;
- Envoi (ECSv4) d'au moins un message de commande (P3MC) à destination de l'au moins une unité centrale de commande (U) à laquelle est rattachée l'au moins un dispositif domotique (D1, D2) correspondant à l'au moins un élément d'identification (DURL), le message de commande (P3MC) étant relatif à la fonction (P1F1D1, P1F2D1, P1F1D2, P1F2D2) selon le premier protocole de communication (P1) ;

**10.** Procédé de commande selon la revendication 9, comprenant en outre les étapes suivantes :

- Réception (ECSv8) d'au moins un message de retour de commande (RP3MC) en provenance de l'au moins une unité centrale de commande (U) à laquelle est rattachée l'au moins un dispositif domotique (D1, D2) selon le premier protocole de communication (P1) ;
- Optionnellement, Application (ECSv9) d'une règle de conversion de fonction afin de convertir une information de retour de commande exprimée selon le premier protocole de communication (P1) en une information de retour de commande exprimée selon le second protocole de communication cible (P2) ;
- Envoi (ECSv10) d'au moins un message de retour de commande (RP2MC) à destination de l'au moins un noeud (N1) communiquant selon un deuxième protocole de communication (P2), le message de retour de commande (RP2MC) comprenant une information de retour de commande selon le deuxième protocole cible de communication (P2) ;

**11.** Procédé de supervision d'une installation domotique (Su) configurée selon le procédé de configuration de l'une des revendications 1 à 7 et comprenant au moins un dispositif domotique (D1, D2) et au moins une unité centrale de commande (U), l'au moins un dispositif domotique (D1, D2) étant susceptible de communiquer avec l'unité centrale de commande (U) par l'intermédiaire d'au moins un premier protocole (P1); le procédé étant exécuté par une unité de gestion (Sv) connectée à distance à l'installation domotique (Su) par l'intermédiaire d'un réseau étendu et susceptible de communiquer avec l'au moins une unité centrale de commande (U); le procédé comprenant les étapes suivantes :

- Réception (ESSv4) d'un message de supervision (P3MS) en provenance d'une unité centrale de commande (U) à laquelle est rattachée un dispositif domotique (D1, D2) comprenant une information relative à une valeur d'au moins une variable d'état (P1S1D1, P1S2D1, P1S1D2, P1S2D2) de l'au moins un dispositif domotique (D1, D2) selon ledit premier protocole de communication (P1) ;
- Application (ESSv5) d'une règle de conversion d'état afin de convertir l'au moins une information relative à une valeur d'au moins une variable d'état (P1S1D1, P1S2D1, P1S1D2, P1S2D2) de l'au moins un dispositif domotique (D1, D2) exprimée selon le premier protocole de communication (P1) en une valeur d'au moins un variable d'état (P2S1D1, P2S2D1, P2S1D2, P2S2D2) de l'au moins un dispositif domotique (D1, D2) exprimée selon le second protocole de communication cible (P2) ;
- Détermination (ESSv6) d'un identifiant de localisation (P2AD1, P2AD2) de l'au moins un dispositif domotique (P2AD1, P2AD2) selon le deuxième protocole de communication (P2) sur la base d'au moins un élément d'identification (DURL) contenu dans le message de supervision ou déterminable à réception du message de supervision dont le contenu ou la combinaison permet une identification unique d'un dispositif domotique (D1) ;
- Envoi (ESSv8) d'au moins un message de supervision (P2MS) à destination d'au moins un noeud (N1) communiquant selon un deuxième protocole de communication (P2), le message de supervision (P2MS) comprenant une information relative à une valeur d'au moins un variable d'état (P2S1D1, P2S2D1, P2S1D2, P2S2D2) de l'au moins un dispositif domotique (D1, D2) selon le deuxième protocole cible de communication (P2) et en relation avec l'identifiant de localisation (P2AD1, P2AD2) de l'au moins un dispositif domotique (D1, D2) selon le deuxième protocole de communication (P2) ;

12. Procédé selon la revendication 11, dans lequel l'étape d'envoi (ESSv8) est réalisée à destination d'au moins un noeud (N1) enregistré dans une liste de souscription à un événement relatif à l'au moins une variable d'état (P2S1D1, P2S2D1, P2S1D2, P2S2D2).

13. Procédé selon l'une des revendications 11 ou 12, comprenant une étape d'envoi à destination d'une unité centrale de commande (U) à laquelle est rattachée un dispositif domotique (D1, D2) d'une demande d'enregistrement dans une liste de souscription à un événement relatif à l'au moins une variable d'état (P2S1D1, P2S2D1, P2S1D2, P2S2D2) du dispositif domotique (D1, D2).

**Patentansprüche**

1. Verfahren zur Konfiguration einer Gebäudeautomatisierungsanlage (Su), mindestens eine Gebäudeautomatisierungsvorrichtung (D1, D2) umfassend und mindestens eine zentrale Steuereinheit (U), wobei die mindestens eine Gebäudeautomatisierungsvorrichtung (D1, D2) mittels mindestens einem ersten Protokoll (P1) mit der mindestens einen zentralen Steuereinheit (U) kommunizieren kann, wobei das Verfahren von einer Verwaltungseinheit (Sv) ausgeführt wird, die mittels einem Weitverkehrsnetz remote mit der Gebäudeautomatisierungsanlage (Su) verbunden ist und mit der mindestens einen zentralen Steuereinheit (U) kommunizieren kann; wobei das Verfahren die folgenden Schritte umfasst:

  - Empfang (EcfSv3, EcfSv4, ECfSv2') , aus der mindestens einen zentralen Steuereinheit (U) oder einem Benutzer (Usr/T), von mindestens einer Konfigurationsnachricht (MCfD1, MCfD2, MCfUsr), bezüglich mindestens einer Gebäudeautomatisierungsvorrichtung (D1, D2) und mindestens einer Definition einer Funktion (P1F1 D1, P1F2D1, P1F1D2, P1F2D2) oder einer Funktionsgruppe der mindestens einen Gebäudeautomatisierungsvorrichtung (D1, D2), gemäß dem ersten Kommunikationsprotokoll (P1);
  - Erlangen (EcfSv5) einer Lokalisierungsidentifikation (P2AD1, P2AD2) der mindestens einen Gebäudeautomatisierungsvorrichtung (D1, D2), gemäß einem zweiten Zielkommunikationsprotokoll (P2);
  - Aufzeichnung (ECfSv7) der Übereinstimmung zwischen der Lokalisierungsidentifikation (P2AD1, P2AD2) der mindestens einen Gebäudeautomatisierungsvorrichtung (D1, D2), gemäß dem zweiten Kommunikationsprotokoll (P2), und mindestens einem Identifizierungselement (DURL), das in der Konfigurationsnachricht enthalten ist oder beim Empfang der Konfigurationsnachricht bestimmbar ist, dessen Inhalt oder dessen Kombination eine eindeutige Identifizierung einer Gebäudeautomatisierungsvorrichtung (D1) ermöglicht;
  - Aufzeichnung (EcfSv8) der mindestens einen Definition einer Funktion (P1F1D1, P1F2D1, P1F1D2, P1F2D2) oder einer Funktionsgruppe von der mindestens einen Gebäudeautomatisierungsvorrichtung (D1, D2), gemäß dem ersten Kommunikationsprotokoll (P1), bezüglich der mindestens einen Konfigurationsnachricht (MCfD1, MCfD2, MCfUsr), die aus der mindestens einen zentrale Steuereinheit (U) empfangen wurde oder von einem Benutzer (Usr/T), und einer Funktionsumwandlungsregel, die eingerichtet ist, um die Definition der mindestens einen Funktion (P1F1D1, P1F2D1, P1F1D2, P1F2D2) umzuwandeln oder einer Funktionsgruppe der mindestens einen Gebäudeautomatisierungsvorrichtung (D1, D2), gemäß dem ersten Kommunikationsprotokoll (P1), in mindestens eine Definition einer Funktion (P2F1D1, P2F2D1, P2F1D2, P2F2D2) oder einer Funktionsgruppe der mindestens einen Gebäudeautomatisierungsvorrichtung (D1, D2), gemäß dem zweiten Zielkommunikationsprotokoll (P2).

2. Verfahren zur Konfiguration einer Gebäudeautomatisierungsanlage (Su), mindestens eine Gebäudeautomatisierungsvorrichtung (D1, D2) umfassend und mindestens eine zentrale Steuereinheit (U), wobei die mindestens eine Gebäudeautomatisierungsvorrichtung (D1, D2) mittels mindestens einem ersten Protokoll (P1) mit der mindestens einen zentralen Steuereinheit (U) kommunizieren kann, wobei das Verfahren von einer Verwaltungseinheit (Sv) ausgeführt wird, die mittels einem Weitverkehrsnetz remote mit der Gebäudeautomatisierungsanlage (Su) verbunden ist und mit der mindestens einen zentralen Steuereinheit (U) kommunizieren kann; wobei das Verfahren die folgenden Schritte umfasst:

  - Empfang (EcfSv3, EcfSv4, ECfSv2') , aus der mindestens einen zentralen Steuereinheit (U) oder einem Benutzer (Usr/T), von mindestens einer Konfigurationsnachricht (MCfD1, MCfD2, MCfUsr), bezüglich mindestens einer Gebäudeautomatisierungsvorrichtung (D1, D2) und mindestens einer Definition einer Zustandsvariablen (P1S1D1, P1S2D1, P1S1D2, P1S2D2) oder einer Gruppe von Zustandsvariablen der mindestens einen Gebäudeautomatisierungsvorrichtung (D1, D2), gemäß dem ersten Kommunikationsprotokoll (P1);

- Erlangen (EcfSv5) einer Lokalisierungsidentifikation (P2AD1, P2AD2) der mindestens einen Gebäudeautomatisierungsvorrichtung (D1, D2), gemäß einem zweiten Zielkommunikationsprotokoll (P2);

- Aufzeichnung (ECfSv7) der Übereinstimmung zwischen der Lokalisierungsidentifikation (P2AD1, P2AD2) der mindestens einen Gebäudeautomatisierungsvorrichtung (D1, D2), gemäß dem zweiten Kommunikationsprotokoll (P2) und mindestens einem Identifizierungselement (DURL), das in der Konfigurationsnachricht enthalten ist oder beim Empfang der Konfigurationsnachricht bestimmbar ist, dessen Inhalt oder dessen Kombination eine eindeutige Identifizierung einer Gebäudeautomatisierungsvorrichtung (D1) ermöglicht;

- Aufzeichnung (EcfSv8) der mindestens einen Definition einer Zustandsvariablen (P1S1D1, P1S2D1, P1S1D2, P1S2D2) oder einer Gruppe von Zustandsvariablen der mindestens einen Gebäudeautomatisierungsvorrichtung (D1, D2), gemäß dem ersten Kommunikationsprotokoll (P1), bezüglich der mindestens einen Konfigurationsnachricht (MCfD1, MCfD2, MCfUsr), die aus der mindestens einen zentralen Steuereinheit (U) empfangen wurde oder von einem Benutzer (Usr/T), und einer Zustandsumwandlungsregel, die eingerichtet ist, um die Definition der mindestens einen Zustandsvariablen (P1S1D1, P1S2D1, P1S1D2, P1S2D2) umzuwandeln, oder von einer Gruppe von Zustandsvariablen der mindestens einen Gebäudeautomatisierungsvorrichtung (D1, D2), gemäß dem ersten Kommunikationsprotokoll (P1), in mindestens eine Definition einer Zustandsvariablen (P2S1D1, P2S2D1, P2S1D2, P2S2D2) oder einer Gruppe von Zustandsvariablen der mindestens einen Gebäudeautomatisierungsvorrichtung (D1, D2), gemäß dem zweiten Zielkommunikationsprotokoll (P2).

3. Verfahren nach Anspruch 1, ferner den folgenden Schritt umfassend:

- Erlangen (EcfSv6) mindestens einer Funktionsumwandlungsregel, die eingerichtet ist, um die Definition der mindestens einen Funktion (P1F1D1, P1F2D1, P1F1D2, P1F2D2) umzuwandeln oder einer Funktionsgruppe der mindestens einen Gebäudeautomatisierungsvorrichtung (D1, D2), gemäß dem ersten Kommunikationsprotokoll (P1), in mindestens eine Definition einer Funktion (P2F1D1, P2F2D1, P2F1D2, P2F2D2) oder einer Funktionsgruppe der mindestens einen Gebäudeautomatisierungsvorrichtung (D1, D2), gemäß dem zweiten Zielkommunikationsprotokoll (P2).

- Aufzeichnung (EcfSv8) der mindestens einen Funktionsumwandlungsregel.

4. Verfahren nach Anspruch 2, ferner den folgenden Schritt umfassend:

- Erlangen (EcfSv6) von mindestens einer Zustandsumwandlungsregel, die eingerichtet ist, um die Definition der mindestens einen Zustandsvariablen (P1S1D1, P1S2D1, P1S1D2, P1S2D2) umzuwandeln oder einer Gruppe von Zustandsvariablen der mindestens einen Gebäudeautomatisierungsvorrichtung (D1, D2), gemäß dem ersten Kommunikationsprotokoll (P1), in mindestens eine Definition einer Zustandsvariablen (P2S1D1, P2S2D1, P2S1D2, P2S2D2) oder einer Gruppe von Zustandsvariablen der mindestens einen Gebäudeautomatisierungsvorrichtung (D1, D2), gemäß dem zweiten Zielkommunikationsprotokoll (P2).

- Aufzeichnung (EcfSv8) der mindestens einen Zustandsumwandlungsregel.

5. Verfahren nach einem der Ansprüche 1 bis 4, ferner den folgenden Schritt umfassend:

- Definition einer Aktion, die mindestens teilweise von der zentralen Steuereinheit oder der Verwaltungseinheit in Übereinstimmung mit einer Funktion gemäß dem zweiten Protokoll realisiert werden soll, das einer Lokalisierungsidentifikation entspricht.

6. Verfahren nach einem der Ansprüche 1 bis 5, wobei der Umwandlungsschritt die Beschränkung der angeforderten Funktion oder das Verbot einer zu realisierenden Steuerung/Funktion umfasst.

7. Verfahren nach einem der Ansprüche 1 bis 6, wobei die mindestens eine Konfigurationsnachricht (MCfD1, MCfD2, MCfUsr), die im Empfangsschritt (EcfSv3, EcfSv4, ECfSv2') empfangen wird, sich ferner auf einen Typ (P1TD1, P1TD2) der mindestens einen Gebäudeautomatisierungsvorrichtung (D1, D2) bezieht, und wobei der Typ (P1TD1, P1TD2) der mindestens einen Gebäudeautomatisierungsvorrichtung (D1, D2) während des Aufzeichnungsschritts (EcfSv8) aufgezeichnet wird.

8. Verfahren zum Auffinden einer Gebäudeautomatisierungsanlage (Su), die nach dem Konfigurationsverfahren einer der Ansprüche 1 bis 7 konfiguriert ist, und mindestens eine Gebäudeautomatisierungsvorrichtung (D1, D2) umfasst, und mindestens eine zentrale Steuereinheit (U), wobei die mindestens eine Gebäudeautomatisierungsvorrichtung (D1, D2) über mindestens ein erstes Protokoll (P1) mit der mindestens einen zentralen Steuereinheit (U) kommunizieren kann; wobei das Verfahren von einer Verwaltungseinheit (Sv) ausgeführt wird, die mittels einem Weitverkehrsnetz remote mit der Gebäudeautomatisierungsanlage (Su) verbunden ist und mit der mindestens einen zentralen Steuereinheit (U) kommunizieren kann; wobei das Verfahren die folgenden Schritte umfasst:

- Senden (EDSv2) mindestens einer Kompatibilitäts- oder Beschreibungsnachricht (MDesc1, MDesc2), gemäß einem zweiten Zielkommunikationsprotokoll (P2) in Bezug auf:

◦ mindestens eine Lokalisierungsidentifikation (P2AD1, P2AD2) der mindestens einen Gebäudeautomatisierungsvorrichtung (D1, D2), gemäß dem zweiten Kommunikationsprotokoll, das einer Lokalisierungsidentifikation (P1AD1, P1AD2) der mindestens einen Gebäudeautomatisierungsvorrichtung (D1, D2) gemäß dem ersten Kommunikationsprotokoll (P1) entspricht; und
◦ optional, einen Typ (P2TD1, P2TD2) der mindestens einen Gebäudeautomatisierungsvorrichtung (D1, D2) oder mindestens eine Beschreibung einer Funktion (P2F1D1, P2F2D1, P2F1D2, P2F2D2) oder einer Funktionsgruppe, gemäß dem zweiten Kommunikationsprotokoll (P2), und/oder mindestens eine Beschreibung einer Zustandsvariablen (P2S1D1, P2S2D1, P2S1D2, P2S2D2) oder einer Gruppe von Zustandsvariablen der mindestens einen Gebäudeautomatisierungsvorrichtung (D1, D2), gemäß dem zweiten Kommunikationsprotokoll (P2).

9. Verfahren zum Steuern einer Gebäudeautomatisierungsanlage (Su), die nach dem Konfigurationsverfahren einer der Ansprüche 1 bis 7 konfiguriert ist, und mindestens eine Gebäudeautomatisierungsvorrichtung (D1, D2) umfasst und mindestens eine zentrale Steuereinheit (U), wobei die mindestens eine Gebäudeautomatisierungsvorrichtung (D1, D2) mittels mindestens einem ersten Protokoll (P1) mit der zentralen Steuereinheit (U) kommunizieren kann; wobei das Verfahren von einer Verwaltungseinheit (Sv) ausgeführt wird, die mittels einem Weitverkehrsnetz remote mit der Gebäudeautomatisierungsanlage (Su) verbunden ist und mit der mindestens einen zentralen Steuereinheit (U) kommunizieren kann; wobei das Verfahren die folgenden Schritte umfasst:

- Empfang (ECSv1) von mindestens einer Steuernachricht (P2MC) aus einem Knoten (N1), der gemäß einem zweiten Kommunikationsprotokoll (P2) kommuniziert, das mindestens eine Lokalisierungsidentifikation (P2AD1, P2AD2) einer Gebäudeautomatisierungsvorrichtung (D1, D2) gemäß dem zweiten Zielkommunikationsprotokoll (P2) umfasst, und mindestens einer Funktionsdefinition (P2F1D1, P2F2D1, P2F1D2, P2F2D2) der Gebäudeautomatisierungsvorrichtung (D1, D2), gemäß dem zweiten Kommunikationsprotokoll (P2);
- Bestimmung (ECSv2) von mindestens einem Identifizierungselement (DURL) der Gebäudeautomatisierungsvorrichtung, dessen Inhalt oder dessen Kombination eine eindeutige Identifizierung der Gebäudeautomatisierungsvorrichtung (D1, D2) ermöglicht, anhand der Lokalisierungsidentifikation (P2AD1, P2AD2) der mindestens einen Gebäudeautomatisierungsvorrichtung (D1, D2), gemäß dem zweiten Kommunikationsprotokoll (P2);
- optional, Anwendung (ECSv3) einer Funktionsumwandlungsregel, die eingerichtet ist, um die Definition der mindestens einen Funktion (P2F1D1, P2F2D1, P2F1D2, P2F2D2) umzuwandeln, gemäß dem zweiten Zielkommunikationsprotokoll (P2), in mindestens eine Funktionsdefinition (P1F1D1, P1F2D1, P1F1D2, P1F2D2), gemäß dem ersten Kommunikationsprotokoll (P1);
- Senden (ECSv4) mindestens einer Steuernachricht (P3MC) an die mindestens eine zentrale Steuereinheit (U), an die die mindestens eine Gebäudeautomatisierungsvorrichtung (D1, D2) angeschlossen ist, die dem mindestens einen Identifizierungselement (DURL) entspricht, wobei sich die Steuernachricht (P3MC) auf die Funktion (P1F1D1, P1F2D1, P1F1D2, P1F2D2) bezieht, gemäß dem ersten Kommunikationsprotokoll (P1).

10. Steuerverfahren nach Anspruch 9, ferner die folgenden Schritte umfassend:

- Empfang (ECSv8) von mindestens einer Steuerrückmeldungsnachricht (RP3MC) aus der mindestens einen zentralen Steuereinheit (U), an die die mindestens eine Gebäudeautomatisierungsvorrichtung (D1, D2) angeschlossen ist, gemäß einem erstem Kommunikationsprotokoll (P1);
- optional, Anwendung (ECSv9) einer Funktionsumwandlungsregel, um eine Steuerrückmeldungsinformation, die gemäß dem ersten Kommunikationsprotokoll (P1) ausgedrückt ist, in eine Steuerrückmeldungsinformation, die gemäß dem zweiten Zielkommunikationsprotokoll (P2) ausgedrückt ist, umzuwandeln;
- Senden (ECSv10) von mindestens einer Steuerrückmeldungsnachricht (RP2MC) an den mindestens einen Knoten (N1), der gemäß einem zweiten Kommunikationsprotokoll (P2) kommuniziert, wobei die Steuerrückmeldungsnachricht (RP2MC) eine Steuerrückmeldungsinformation umfasst, gemäß dem zweiten Zielkommunikationsprotokoll (P2).

**11.** Verfahren zur Überwachung einer Gebäudeautomatisierungsanlage (Su), die nach dem Konfigurationsverfahren einer der Ansprüche 1 bis 7 konfiguriert ist, und mindestens eine Gebäudeautomatisierungsvorrichtung (D1, D2) umfasst und mindestens eine zentrale Steuereinheit (U), wobei die mindestens eine Gebäudeautomatisierungsvorrichtung (D1, D2) mittels mindestens einem ersten Protokoll (P1) mit der zentralen Steuereinheit (U) kommunizieren kann; wobei das Verfahren von einer Verwaltungseinheit (Sv) ausgeführt wird, die mittels einem Weitverkehrsnetz remote mit der Gebäudeautomatisierungsanlage (Su) verbunden ist und mit der mindestens einen zentralen Steuereinheit (U) kommunizieren kann; wobei das Verfahren die folgenden Schritte umfasst:

- Empfang (ESSv4) einer Überwachungsnachricht (P3MS) aus einer zentralen Steuereinheit (U), an die eine Gebäudeautomatisierungsvorrichtung (D1, D2) angeschlossen ist, die eine Information bezüglich einem Wert mindestens einer Zustandsvariablen (P1S1D1, P1S2D1, P1S1D2, P1S2D2) der mindestens einen Gebäudeautomatisierungsvorrichtung (D1, D2) umfasst, gemäß dem ersten Kommunikationsprotokoll (P1);
- Anwendung (ESSv5) einer Zustandsumwandlungsregel, um die mindestens eine Information bezüglich einem Wert mindestens einer Zustandsvariablen (P1S1D1, P1S2D1, P1S1D2, P1S2D2) der mindestens einen Gebäudeautomatisierungsvorrichtung (D1, D2) umzuwandeln, die gemäß dem ersten Kommunikationsprotokoll (P1) ausgedrückt ist, in einen Wert mindestens einer Zustandsvariablen (P2S1D1, P2S2D1, P2S1D2, P2S2D2) mindestens einer Gebäudeautomatisierungsvorrichtung (D1, D2), die gemäß dem zweiten Zielkommunikationsprotokoll (P2) ausgedrückt ist;
- Bestimmung (ESSv6) einer Lokalisierungsidentifikation (P2AD1, P2AD2) der mindestens einen Gebäudeautomatisierungsvorrichtung (P2AD1, P2AD2), gemäß dem zweiten Kommunikationsprotokoll (P2), anhand des mindestens einen Identifizierungselements (DURL), das in der Überwachungsnachricht enthalten ist oder beim Empfang der Überwachungsnachricht bestimmbar ist, dessen Inhalt oder dessen Kombination eine eindeutige Identifizierung einer Gebäudeautomatisierungsvorrichtung (D1) ermöglicht;
- Senden (ESSv8) mindestens einer Überwachungsnachricht (P2MS) an den mindestens einen Knoten (N1), der gemäß einem zweiten Kommunikationsprotokoll (P2) kommuniziert, wobei die Überwachungsnachricht (P2MS) eine Information bezüglich einem Wert von mindestens einer Zustandsvariablen (P2S1D1, P2S2D1, P2S1D2, P2S2D2) der mindestens einen Gebäudeautomatisierungsvorrichtung (D1, D2) umfasst, gemäß dem zweiten Zielkommunikationsprotokoll (P2) und in Bezug auf die Lokalisierungsidentifikation (P2AD1, P2AD2) von mindestens einer Gebäudeautomatisierungsvorrichtung (D1, D2), gemäß dem zweiten Kommunikationsprotokoll (P2).

**12.** Verfahren nach Anspruch 11, wobei der Schritt der Sendung (ESSv8) an mindestens einen Knoten (N1) realisiert wird, der in einer Ereignis-Subskriptionsliste aufgezeichnet ist, bezüglich mindestens einer Zustandsvariablen (P2S1D1, P2S2D1, P2S1D2, P2S2D2).

**13.** Verfahren nach einem der Ansprüche 11 oder 12, einen Schritt des Sendens an eine zentrale Steuereinheit (U) umfassend, an die eine Gebäudeautomatisierungsvorrichtung (D1, D2) angeschlossen ist, einer Anforderung zur Aufzeichnung in eine Ereignis-Subskriptionsliste, bezüglich mindestens einer Zustandsvariablen (P2S1D1, P2S2D1, P2S1D2, P2S2D2) der Gebäudeautomatisierungsvorrichtung (D1, D2).

## Claims

**1.** A method for configuring a home automation system (Su) comprising at least one home automation device (D1, D2) and at least one central control unit (U), the at least one home automation device (D1, D2) being capable of communicating with the at least one central control unit (U) through at least one first protocol (P1), the method being executed by a management unit (Sv) connected remotely to a home automation system (Su) through an extended network and capable of communicating with the at least one central control unit (U); the method comprising the following steps:

- receiving (EcfSv3, EcfSv4, ECfSv2'), from the at least one central control unit (U) or from a user (Usr/T), at least one configuration message (MCfD1, MCfD2, MCfUsr) relating to at least one home automation device (D1, D2) and to at least one definition of a function (P1F1D1, P1F2D1, P1F1D2, P1F2D2) or of a group of functions of the at least one home automation device (D1, D2) according to said first communication protocol (P1);
- Obtaining (EcfSv5) a location identifier (P2AD1, P2AD2) of the at least one home automation device (D1, D2) according to a second target communication protocol (P2);
- Recording (ECfSv7) the correspondence between the location identifier (P2AD1, P2AD2) of the at least one home automation device (D1, D2) according to the second communication protocol (P2) and of at least one identification element (DURL) contained in the configuration message or determinable upon receipt of the configuration message the content or combination of which allows a unique identification of a home automation device (D1);

- Recording (EcfSv8) at least one definition of a function (P1F1D1, P1 F2D1, P1 F1 D2, P1 F2D2) or of a group of functions of at least one home automation device (D1, D2) according to said first communication protocol (P1) relating to the at least one configuration message (MCfD1, MCfD2, MCfUsr) received from the at least one central control unit (U) or from a user (Usr/T) and from a function conversion rule arranged to convert the definition of the at least one function (P1F1D1, P1F2D1, P1F1D2, P1F2D2) or of a group of functions of the at least one home automation device (D1, D2) according to the first protocol (P1) into at least one definition of a function (P2F1D1, P2F2D1, P2F1D2, P2F2D2) or of a group of functions of the at least one home automation device (D1, D2) according to the second target communication protocol (P2).

2. The method for configuring a home automation system (Su) comprising at least one home automation device (D1, D2) and at least one central control unit (U), the at least one home automation device (D1, D2) being capable of communicating with the at least one central control unit (U) through at least one first protocol (P1), the method being executed by a management unit (Sv) connected remotely to the home automation system (Su) through an extended network and capable of communicating with the at least one central control unit (U); the method comprising the following steps:

- Receiving (EcfSv3, EcfSv4, ECfSv2'), from the at least one central control unit (U) or from a user (Usr/T), at least one configuration message (MCfD1, MCfD2, MCfUsr) relating to at least one home automation device (D1, D2) and to at least one definition of a state variable (P1S1D1, P1S2D1, P1S1D2, P1S2D2) or of a group of state variables of the at least one home automation device (D1, D2) according to said first communication protocol (P1);
- Obtaining (EcfSv5) a location identifier (P2AD1, P2AD2) of the at least one home automation device (D1, D2) according to a second target communication protocol (P2);
- Recording (ECfSv7) the correspondence between the location identifier (P2AD1, P2AD2) of the at least one home automation device (D1, D2) according to the second communication protocol (P2) and of at least one identification element (DURL) contained in the configuration message or determinable upon receipt of the configuration message the content or combination of which allows a unique identification of a home automation device (D1);
- Recording (EcfSv8) the at least one definition of a state variable (P1S1D1, P1S2D1, P1S1D2, P1S2D2) or of a group of state variables of at least one home automation device (D1, D2) according to said first communication protocol (P1) relating to the at least one configuration message (MCfD1, MCfD2, MCfUsr) received from the at least one central control unit (U) or from a user (Usr/T) and a state conversion rule arranged to convert the definition of the at least one state variable (P1S1D1, P1S2D1, P1S1D2, P1S2D2) or of a group of state variables of at least one home automation device (D1, D2) according to the first communication protocol (P1) in at least one definition of a state variable (P2S1D1, P2S2D1, P2S1D2, P2S2D2) or of a group of state variables of the at least one home automation device (D1, D2) according to the second target communication protocol (P2).

3. The method according to claim 1, further comprising the following step:

- Obtaining (EcfSv6) at least one function conversion rule arranged to convert the definition of the at least one function (P1F1D1, P1F2D1, P1F1D2, P1F2D2) or of a group of functions of the at least one home automation device (D1, D2) according to the first communication protocol (P1) into at least one definition of a function (P2F1D1, P2F2D1, P2F1D2, P2F2D2) or of a group of functions of the at least one home automation device (D1, D2) according to the second target communication protocol (P2),
- Recording (EcfSv8) said at least one function conversion rule.

4. The method according to claim 2, further comprising the following step:

- Obtaining (EcfSv6) at least one state conversion rule arranged to convert the definition of the at least one state variable (P1S1D1, P1S2D1, P1S1D2, P1S2D2) or of a group of state variables from the at least one home automation device (D1, D2) according to the first communication protocol (P1) into at least one definition of a state variable (P2S1D1, P2S2D1, P2S1D2, P2S2D2) or of a group of state variables of the at least one home automation device (D1, D2) according to the second target communication protocol (P2).
- Recording (EcfSv8) said at least one state conversion rule.

**5.** The method according to any one of claims 1 to 4, further comprising the following step:

- defining an action to be performed at least partially by the central control unit or the management unit in correspondence with a function according to the second protocol corresponding to a location identifier.

**6.** The method according to any one of claims 1 to 5, wherein the conversion step comprises limiting the requested function or prohibiting an instruction/function to be performed.

**7.** The method according to any one of claims 1 to 6, wherein the at least one configuration message (MCfD1, MCfD2, MCfUsr) received upon the receiving step (EcfSv3, EcfSv4, ECfSv2') also relates to a type (P1TD1, P1TD2) of the at least one home automation device (D1, D2) and wherein the type (P1TD1, P1TD2) of the at least one home automation device (D1, D2) is recorded during the recording step (EcfSv8).

**8.** A method for discovering a home automation system (Su) configured according to the configuration method of any of claims 1 to 7 and comprising at least one home automation device (D1, D2) and at least one central control unit (U), the at least one home automation device (D1, D2) being capable of communicating with the at least one central control unit (U) via at least one first protocol (P1); the method being executed by a management unit (Sv) remotely connected to a home automation system (Su) via an extended network and capable of communicating with at least one central control unit (U); the method comprising the following steps:

- Sending (EDSv2) at least one description of compatibility announcement message (MDesc1, MDesc2) according to a second target communication protocol (P2) in relation to:

  ◦ at least one location identifier (P2AD1, P2AD2) of the at least one home automation device (D1, D2) according to the second communication protocol corresponding to a location identifier (P1AD1, P1AD2) of the at least one home automation device (D1, D2) according to the first communication protocol (P1); and
  ◦ Optionally, a type (P2TD1, P2TD2) of the at least one home automation device (D1, D2) or at least one description of a function (P2F1D1, P2F2D1, P2F1D2, P2F2D2) or of a group of functions according to the second communication protocol (P2) and/or at least one description of a state variable (P2S1D1, P2S2D1, P2S1D2, P2S2D2) or of a group of state variables of the at least one home automation device (D1, D2) according to the second communication protocol (P2).

**9.** A method for controlling a home automation system (Su) configured according to the configuration method of any of claims 1 to 7 and comprising at least one home automation device (D1, D2) and at least one central control unit (U), the at least one home automation device (D1, D2) being capable of communicating with the central control unit (U) through at least one first protocol (P1); the method being executed by a management unit (Sv) remotely connected to the home automation system (Su) via an extended network and capable of communicating with the at least one central control unit (U); the method comprising the following steps:

- Receiving (ECSv1) at least one control message (P2MC) from a node (N1) communicating according to a second communication protocol (P2) comprising at least one location identifier (P2AD1, P2AD2) of a home automation device (D1, D2) according to the second target communication protocol (P2) and at least one definition of a function (P2F1D1, P2F2D1, P2F1D2, P2F2D2) of the home automation device (D1, D2) according the second communication protocol (P2);
- Determining (ECSv2) at least one identification element (DURL) of the home automation device the content or combination of which allows a unique identification of the home automation device (D1, D2) based on the location identifier (P2AD1, P2AD2 ) of the at least one home automation device (D1, D2) according to the second communication protocol (P2);
- Optionally, applying (ECSv3) a function conversion rule arranged to convert the definition of the at least one function (P2F1D1, P2F2D1, P2F1D2, P2F2D2) according to the second target communication protocol (P2) into at least one definition of a function (P1F1D1, P1F2D1, P1F1D2, P1F2D2) according to the first communication protocol (P1);
- Sending (ECSv4) at least one control message (P3MC) to the at least one central control unit (U) to which is attached the at least one home automation device (D1, D2) corresponding to the at least one identification element (DURL), the control message (P3MC) relating to the function (P1F1D1, P1F2D1, P1F1D2, P1F2D2) according to the first communication protocol (P1).

**10.** The control method according to claim 9, further comprising the following steps:

- Receiving (ECSv8) at least one control feedback message (RP3MC) from the at least one central control unit (U) to which is attached the at least one home automation device (D1, D2) according to the first communication protocol (P1);
- Optionally, applying (ECSv9) a function conversion rule in order to convert a control feedback information item expressed according to the first communication protocol (P1) into a control feedback information item expressed according to the second target communication protocol (P2);
- Sending (ECSv10) at least one control feedback message (RP2MC) to the at least one node (N1) communicating according to a second communication protocol (P2), the control feedback message (RP2MC) comprising a control feedback information item according to the second communication target protocol (P2);

11. A method for supervising a home automation system (Su) configured according to the configuration method of any of claims 1 to 7 and comprising at least one home automation device (D1, D2) and at least one central control unit (U), the at least one home automation device (D1, D2) being capable of communicating with the central control unit (U) through at least one first protocol (P1); the method being executed by a management unit (Sv) remotely connected to the home automation installation (Su) through an extended network and capable of communicating with the at least one central control unit (U); the method comprising the following steps:

    - Receiving (ESSv4) a supervision message (P3MS) from a central control unit (U) to which is attached a home automation device (D1, D2) comprising an item of information relating to a value of at least one state variable (P1S1D1, P1S2D1, P1S1D2, P1S2D2) of the at least one home automation device (D1, D2) according to said first communication protocol (P1);
    - Applying (ESSv5) a state conversion rule in order to convert at least one item of information relating to a value of at least one state variable (P1S1D1, P1S2D1, P1S1D2, P1S2D2) of at least one home automation device (D1, D2) expressed according to the first communication protocol (P1) into a value of at least one state variable (P2S1D1, P2S2D1, P2S1D2, P2S2D2) of the at least one home automation device (D1, D2) expressed according to the second target communication protocol (P2);
    - Determining (ESSv6) a location identifier (P2AD1, P2AD2) of the at least one home automation device (P2AD1, P2AD2) according to the second communication protocol (P2) based on at least one identification element (DURL) contained in the supervision message or determinable upon receipt of the supervision message, the content or combination of which allows a unique identification of a home automation device (D1);
    - Sending (ESSv8) at least one supervision message (P2MS) to at least one node (N1) communicating according to a second communication protocol (P2), the supervision message (P2MS) comprising an item of information relating to a value of at least one state variable (P2S1D1, P2S2D1, P2S1D2, P2S2D2) of the at least one home automation device (D1, D2) according to the second target communication protocol (P2) and in relation to the location identifier (P2AD1, P2AD2) of the at least one home automation device (D1, D2) according to the second communication protocol (P2).

12. The method according to claim 11, wherein the sending step (ESSv8) is performed to at least one node (N1) recorded in a list of subscription to an event relating to the at least one state variable (P2S1D1, P2S2D1, P2S1D2, P2S2D2).

13. The method according to any of claims 11 or 12, comprising a step of sending, to a central control unit (U) to which a home automation device (D1, D2) is attached, a request for registration in a subscription list to an event relating to the at least one state variable (P2S1D1, P2S2D1, P2S1D2, P2S2D2) of the home automation device (D1, D2).

**Fig. 1**

**Fig. 2**

Fig. 3

**Fig. 4**

| P1F | P2F |
|-----|-----|
| P1T | P2T |
| P1S | P2S |

## Fig. 5

| DURL | P1S/P1F/P1T | P2A | P2S/P2F/P2T |
|------|-------------|-----|-------------|
| DURLD1 | P1S1D1 / P1S1F1 | P2AD1 | P2S1D1 / P2S1F1 |
| DURLD1 | P1S2D1 / P1S2F2 | P2AD1 | P2S2D1 / P2S2F2 |
| DURLD2 | P1S1D2 / P1S1F2 | P2AD2 | P2S1D2 / P2S1F2 |
| DURLD2 | P1S2D2 / P1S2F2 | P2AD2 | P2S2D2 / P2S2F2 |
| DURLD1 | P1TD1 | P2AD1 | P2TD1 |

## Fig. 6

## Fig. 7

**Fig. 8**

Fig. 9

**EP 3 563 524 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016038374 A1